# EUROPÄISCHE PATENTSCHRIFT

(11) **EP 4 570 527 B1**
(45) Veröffentlichungstag und Bekanntmachung des Hinweises auf die Patenterteilung: **09.12.2026**
(21) Anmeldenummer: 24219171.6
(22) Anmeldetag: 11.12.2024
(51) Int. Cl.: B60C 11/12, B60C 11/03

(54) **FAHRZEUGREIFEN FÜR DEN EINSATZ UNTER WINTERLICHEN FAHRBEDINGUNGEN**
VEHICLE TYRE FOR USE UNDER WINTER DRIVING CONDITIONS
BANDAGE PNEUMATIQUE POUR VÉHICULES AUTOMOBILES UTILISÉ DANS DES CONDITIONS DE CONDUITE HIVERNALES

(30) Priorität: 14.12.2023 DE 102023212755
(43) Veröffentlichungstag der Anmeldung: 18.06.2025
(73) Patentinhaber: Continental Reifen Deutschland GmbH, 30175 Hannover (DE)
(72) Erfinder: Brockmann, Jürgen, 30175 Hannover (DE); Subramanian Sivanarutchelvi, Manickaraj, 30175 Hannover (DE); Brandau, Christian, 30175 Hannover (DE); Seng, Matthias, 30175 Hannover (DE); Bauer, Claudia, 30175 Hannover (DE); Heinhaupt, Torsten, 30175 Hannover (DE); Kauer Sissel, Patrick, 30175 Hannover (DE)
(74) Vertreter: Continental Corporation

(56) Entgegenhaltungen:
- DE-A1- 102020 214 363
- JP-A- 2005 153 812
- JP-A- 2008 221 955
- JP-A- H08 230 417

## Beschreibung

Die Erfindung betrifft einen Fahrzeugreifen, insbesondere für den Einsatz unter winterlichen Fahrbedingungen.

Bei Reifenherstellern besteht ein stetes Interesse daran, optimierte Fahrzeugreifen für den Einsatz unter winterlichen Fahrbedingungen bereitzustellen. Insbesondere in Regionen, in welchen die Temperaturen in den Wintermonaten oder sogar ganzjährig unter den Gefrierpunkt sinken, werden an solche Fahrzeugreifen regelmäßig besonders hohe Anforderungen gestellt. In vielen Regionen müssen Winterreifen, welche auch unter winterlichen Bedingungen hohe Reibungswiderstände mit dem Untergrund aufweisen, zumindest in den Wintermonaten, sogar gesetzlich verpflichtend am Fahrzeug angebracht werden.

Eine wichtige Anforderung ist dabei eine ausreichende Leistung der Fahrzeugreifen auf Schnee, wobei diese regelmäßig über die Strukturierung des Reifenprofils optimiert wird. Zu diesem Zweck werden im Stand der Technik in die für den Straßenkontakt vorgesehene Kontaktoberfläche der Profilblöcke des Reifenprofils rillenartige Vertiefungen eingebracht, welche auch als "sipe" bezeichnet werden. Diese sipes verbessern die Leistungsfähigkeit der Reifen auf Schnee, werden jedoch mit Blick auf die Fahreigenschaften bei trockenen Witterungsbedingungen als nachteilig empfunden. Insoweit besteht ein Zielkonflikt zwischen den Leistungseigenschaften von Fahrzeugreifen auf Schnee bzw. auf trockener Fahrbahn.

Fahrzeugluftreifen für den Einsatz auf schnee- und eisbelegten Straßen, welche entsprechende "sipes" aufweisen, sind beispielsweise in der JP 2008 221955 A, der JP 2005 153812 A und der JP H08 230417 A offenbart. Weitere Informationen zum technologischen Hintergrund sind in der DE 10 2020 214363 A1 offenbart.

Es wurde beobachtet, dass neue Fahrzeugreifen, d. h. Fahrzeugreifen, welche direkt aus der Fertigung stammen und zuvor noch nicht an einem Fahrzeug verwendet wurden, häufig eine schlechtere initiale Leistungsfähigkeit auf Schnee zeigen. Ohne an diese Theorie gebunden sein zu wollen, wird dies darauf zurückgeführt, dass die für den Fahrbahnkontakt vorgesehene Oberfläche im Vergleich zu angefahrenen Fahrzeugreifen noch zu glatt ist, um einen vorteilhaften Einfluss auf die Rolleigenschaften auf Schnee auszuüben.

Die verringerte Leistungsfähigkeit von fabrikneuen Fahrzeugreifen auf Schnee kann als nachteilig angesehen werden, da insbesondere für anspruchsvolle Anwendungen erforderlich ist, dass auch fabrikneue Fahrzeugreifen vom ersten Moment an ein ausgezeichnetes Fahrverhalten auf Schnee zeigen und die notwendige Fahrsicherheit gewährleisten.

Eine hohe initiale Leistungsfähigkeit auf Schneeuntergrund ist dabei auch für die Endanwenderakzeptanz entsprechender Fahrzeugreifen von hoher Bedeutung. Unmittelbar nach dem Erwerb eines neuen Reifensatzes an Winterreifen besteht beim Endanwender häufig eine besonders hohe Aufmerksamkeit für das Fahrverhalten des neuen Reifensatzes. Die Erwartungshaltung des Endanwenders ist es hierbei regelmäßig, dass gerade neue Fahrzeugreifen über besonders vorteilhafte Fahreigenschaften verfügen, insbesondere wenn es sich explizit um einen Reifen für den Einsatz unter winterlichen Bedingungen handelt. Insoweit kann eine verringerte initiale Leistungsfähigkeit auf Schnee sich für die Endanwenderakzeptanz nachteilig auswirken, wobei die fehlende Zufriedenheit mit der Leistungsfähigkeit des Produktes zumeist auch nicht durch den Umstand korrigiert werden kann, dass sich die Leistungsfähigkeit auf Schnee mit der Zeit, d. h. mit zunehmendem Abnutzungszustand, anfänglich sukzessive verbessert.

Um insoweit auch hinsichtlich der initialen Leistungseigenschaften auf Schnee den Anforderungen bzw. Erwartungen gerecht zu werden, wäre es notwendig, eine noch stärkere Strukturierung der Kontaktfläche vorzunehmen. Hierdurch würde umgekehrt jedoch wiederum die Eigenschaften auf trockener Fahrbahn nachteilig beeinflusst. Insoweit ist der vorstehende Zielkonflikt zwischen den Leistungseigenschaften auf Schnee bzw. auf trockener Fahrbahn insbesondere für neue, nicht angefahrene Fahrzeugreifen, besonders ausgeprägt.

Die primäre Aufgabe der vorliegenden Erfindung war es, die Nachteile des Standes der Technik auszuräumen oder zumindest zu verringern.

Insbesondere war es die Aufgabe der vorliegenden Erfindung, einen Fahrzeugreifen anzugeben, welcher unter winterlichen Bedingungen, insbesondere auf Schnee, ausgezeichnete Leistungseigenschaften zeigt, gleichzeitig jedoch auch auf trockener Fahrbahn günstige Leistungseigenschaften aufweist. Insoweit war es eine Aufgabe der vorliegenden Erfindung, dass der anzugebende Fahrzeugreifen den Zielkonflikt zwischen den Leistungseigenschaften auf Schnee und auf trockener Fahrbahn möglichst vorteilhaft lösen sollte.

Insbesondere war es eine weitere Aufgabe der vorliegenden Erfindung, dass die ausgezeichneten Leistungseigenschaften auf Schnee sich bereits für fabrikneue, nicht angefahrene Fahrzeugreifen zeigen sollten, sodass die gewünschten bzw. sicherheitsrelevanten Eigenschaften auch bei frischen Fahrzeugreifen gewährleistet sind. In diesem Kontext war es eine Aufgabe der vorliegenden Erfindung, den vorstehend beschriebenen Zielkonflikt insbesondere für neue Fahrzeugreifen, in besonders vorteilhafter Weise zu lösen.

Es war eine weitere Aufgabe der vorliegenden Erfindung, dass die anzugebende Lösung möglichst weitgehend unter Rückgriff auf solche Vorrichtungen, Verfahren und Materialien umsetzbar sein sollte, die bereits heute in der Reifenfertigung zum Einsatz kommen. Insbesondere war es eine Aufgabe der vorliegenden Erfindung, dass die anzugebende Lösung ohne die Notwendigkeit von weiteren Bauteilen, beispielsweise Spikes, realisierbar sein sollte.

Die Erfinder der vorliegenden Erfindung haben nunmehr gefunden, dass sich die vorstehend beschriebenen Aufgaben lösen lassen, wenn ein Fahrzeugprofil mit zumindest drei unterschiedlichen Arten von Profilblöcken, welche über das Laufstreifenprofil verteilt sind, vorgesehen wird, wenn in der Oberfläche der Profilblöcke zwei verschiedene Arten von rillenartigen Vertiefungen vorgesehen werden, wenn diese in den weiter außenliegenden Blöcken in hinreichender Zahl und in einem schrägen Schnittwinkel zu weiteren rillenartigen Vertiefungen eingebracht werden, wie es in den Ansprüche definiert ist.

Mit einer entsprechenden Ausgestaltung des Reifenprofils ist es möglich, selbst mit neuen, d. h. unangefahrenen, Fahrzeugreifen ausgezeichnete Rolleigenschaften auf Schnee zu realisieren, ohne dass die Leistungseigenschaften auf trockener Fahrbahn allzu stark verringert werden, sodass der entsprechende Zielkonflikt in besonders vorteilhafter Weise gelöst wird.

Die vorstehend genannten Aufgaben werden somit durch den Gegenstand der Erfindung gelöst, wie er in den Ansprüchen definiert ist. Bevorzugte erfindungsgemäße Ausgestaltungen ergeben sich aus den Unteransprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden.

Die Erfindung betrifft einen Fahrzeugreifen, insbesondere für den Einsatz unter winterlichen Fahrbedingungen, bevorzugt für den Einsatz auf Schnee, mit einem in Umfangsrichtung verlaufenden profilierten Laufstreifen,
wobei der profilierte Laufstreifen eine Vielzahl von durch Profilrillen voneinander getrennten Profilblöcken umfasst, die jeweils eine für den Fahrbahnkontakt vorgesehene Kontaktoberfläche aufweisen, wobei der profilierte Laufstreifen als Profilblöcke umfasst:
   i) eine Vielzahl von ersten Außenprofilblöcken und eine Vielzahl von zweiten Außenprofilblöcken,
   ii) eine Vielzahl von Innenprofilblöcken, und
   iii) eine Vielzahl von jeweils zwischen einem Innenprofilblock und einem ersten Außenprofilblock angeordneten ersten Zwischenprofilblöcken und eine Vielzahl von jeweils zwischen einem Innenprofilblock und einem zweiten Außenprofilblock angeordneten zweiten Zwischenprofilblöcken,
wobei die ersten Außenprofilblöcke, die zweiten Außenprofilblöcke, die ersten Zwischenprofilblöcke und die zweiten Zwischenprofilblöcke in der Kontaktoberfläche jeweils durchgehende oder unterbrochene erste rillenartige Vertiefungen und durchgehende oder unterbrochene zweite rillenartige Vertiefungen umfassen, wobei die ersten rillenartigen Vertiefungen jeweils eine Gesamtrillenlänge von 0,7*L_{B} oder mehr aufweisen, wobei L_{B} die maximale Länge des Profilblocks in axialer Richtung ist, wobei die zweiten rillenartigen Vertiefungen jeweils eine Gesamtrillenlänge von 0,5*B_{B} oder mehr aufweisen, wobei B_{B} die maximale Breite des Profilblocks in Umfangsrichtung ist,
wobei die ersten Außenprofilblöcke, die zweiten Außenprofilblöcke, die ersten Zwischenprofilblöcke und die zweiten Zwischenprofilblöcke jeweils drei oder mehr zweite rillenartige Vertiefungen umfassen, deren Schwerpunktlinien mit der Schwerpunktlinie zumindest einer ersten rillenartigen Vertiefung des Profilblocks einen Schnittwinkel im Bereich von 30° bis 89° einschließen,
wobei die zweiten rillenartigen Vertiefungen zumindest teilweise unterbrochene rillenartige Vertiefungen sind, umfassend zwei oder mehr rillenartige Teilvertiefungen.

Der erfindungsgemäße Fahrzeugreifen umfasst einen umlaufenden Laufstreifen, welcher für den Kontakt mit der Fahrbahnoberfläche vorgesehen ist und über ein Profil verfügt. Insoweit entspricht der erfindungsgemäße Fahrzeugreifen dem dem Fachmann umfassend bekannten Grundaufbau. Beispielhaft ist ein erfindungsgemäßer Fahrzeugreifen, wobei der Fahrzeugreifen ein PKW- oder LKW-Reifen, bevorzugt ein PKW-Reifen. Bevorzugt ist dabei ein erfindungsgemäßer Fahrzeugreifen, wobei der Fahrzeugreifen ein Fahrzeugluftreifen ist.

Der profilierte Laufstreifen umfasst in Übereinstimmung mit dem fachmännischen Verständnis eine Vielzahl von Profilblöcken, welche durch sogenannte Profilrillen voneinander getrennt sind und welche an ihrer in radialer Richtung nach außen weisenden Oberfläche eine Kontaktoberfläche aufweisen, die für den späteren Fahrbahnkontakt vorgesehen ist. Bei den Profilrillen handelt es sich dabei insbesondere um Umfangsrillen, welche sich bevorzugt über den gesamten Umfang des Fahrzeugreifens erstrecken, sowie Querrillen, durch die die Profilblöcke entlang der Umfangsrichtung voneinander separiert werden, wobei zumindest prinzipiell auch Schrägrillen vorgesehen werden können. Bevorzugt ist somit ein erfindungsgemäßer Fahrzeugreifen, wobei die Profilrillen ausgewählt sind aus der Gruppe bestehend aus Querrillen, Umfangsrillen und Schrägrillen.

Eine zentrale Größe, über die im Bereich der Profilgestaltung insbesondere die Tiefe der sonstigen Strukturelemente im Profil angegeben wird, ist die maximale Profilrillentiefe des Fahrzeugreifens, d. h. der maximale Unterschied zwischen der Kontaktoberfläche eines Profilblocks und dem Grund einer Profilrille, wobei diese Profilrille zumeist eine der zentralen umlaufenden Profilrillen sein wird. Insoweit ist es möglich, einzelne Profilrillen, beispielsweise Querrillen, mit einer gegenüber den tiefsten Profilrillen verringerten Rillentiefe auszuführen, um die mit dem Profil erzielbaren Rolleigenschaften weiter zu optimieren, in welchem Fall die mittlere Profiltiefe von der maximalen Profiltiefe abweicht. Bevorzugt ist ein erfindungsgemäßer Fahrzeugreifen, wobei die Profilrillen eine mittlere Profiltiefe von 5 mm oder mehr, bevorzugt 6 mm oder mehr, besonders bevorzugt 7 mm oder mehr, aufweisen, und/oder wobei die maximale Tiefe der Profilrillen des Fahrzeugreifens relativ zu der Kontaktoberfläche 6 mm oder mehr, bevorzugt 7 mm oder mehr, besonders bevorzugt 8 mm oder mehr, beträgt.

In Übereinstimmung mit dem fachmännischen Verständnis ist es vorteilhaft, wenn der Fahrzeugreifen relativ gleichmäßige Laufeigenschaften zeigt, was insbesondere dadurch erreicht werden kann, dass das Laufstreifenprofil eine gewisse Rotationssymmetrie aufweist, sodass sich die vorgesehenen Strukturelemente über den Umfang hinweg wiederholen, beispielsweise durch Einstellen einer n-zähligen Drehachse Cn. Die Zusammensetzung des gesamten profilierten Laufstreifens aus einer Vielzahl an wiederkehrenden, kleinsten Profilelementen wird vom Fachmann dabei auch als "Verpitchung" bezeichnet. Bevorzugt ist somit ein erfindungsgemäßer Fahrzeugreifen, wobei der profilierte Laufstreifen bezogen auf die Rotationsachse des Fahrzeugreifens rotationssymmetrisch ist, bevorzugt mit einer Rotationssymmetrie von C2 oder mehr, bevorzugt C3 oder mehr, besonders bevorzugt C4 oder mehr, insbesondere bevorzugt C5 oder mehr.

Durch die Anordnung der Profilblöcke und die Ausgestaltung der Strukturierung ist es möglich, dass der Fahrzeugreifen infolge ungleichmäßiger Rolleigenschaften in den Rotationsrichtungen ein laufrichtungsgebundener Fahrzeugreifen ist. In diesem Fall handelt es sich um einen erfindungsgemäßen Fahrzeugreifen, wobei der Fahrzeugreifen ein laufrichtungsgebundener Fahrzeugreifen ist.

Der erfindungsgemäße Fahrzeugreifen umfasst drei Grundarten von Profilblöcken, wobei zumindest prinzipiell auch weitere Profilblöcke vorgesehen werden können, wobei es für im Wesentlichen alle Ausführungsformen bevorzugt ist, wenn der profilierte Laufstreifen aus den entsprechenden Profilblöcken besteht.

Bei den Grundarten der Profilblöcke handelt es sich um Außenprofilblöcke, Innenprofilblöcke und Zwischenprofilblöcke. Hierbei wird zumindest für die Außenprofilblöcke und die Zwischenprofilblöcke, jedoch potentiell auch für die Innenprofilblöcke, jeweils zwischen ersten und zweiten Profilblöcken unterschieden, wodurch ausgedrückt wird, dass diese in axialer Richtung beiderseits der zentralen Umfangsrichtung angeordnet sind. Es handelt sich mit anderen Worten insbesondere um einen erfindungsgemäßen Fahrzeugreifen, wobei die ersten Außenprofilblöcke und die zweiten Außenprofilblöcke in axialer Richtung auf unterschiedlichen Seiten der Innenprofilblöcke angeordnet sind, und/oder wobei die ersten Zwischenprofilblöcke und die zweiten Zwischenprofilblöcke in axialer Richtung auf unterschiedlichen Seiten der Innenprofilblöcke angeordnet sind. Wiederum in anderen Worten handelt es sich um einen erfindungsgemäßen Fahrzeugreifen, wobei sämtliche ersten Außenprofilblöcke und sämtliche zweiten Außenprofilblöcke in axialer Richtung auf unterschiedlichen Seiten der orthogonal zur Rotationsachse stehenden zentralen Ebene des Fahrzeugreifens liegen, und/oder wobei sämtliche ersten Zwischenprofilblöcke und sämtliche zweiten Zwischenprofilblöcke in axialer Richtung auf unterschiedlichen Seiten der orthogonal zur Rotationsachse stehenden zentralen Ebene des Fahrzeugreifens liegen.

Die ersten und zweiten Außenprofilblöcke liegen in axialer Richtung weiter außen im profilierten Laufstreifen als die Zwischenprofilblöcke, welche wiederum in axialer Richtung weiter außen liegen als die Innenprofilblöcke. In einem profilierten Laufstreifen, welcher ausschließlich aus den vorgenannten Profilblöcken besteht, kann an einem Punkt des Umfangs entlang der axialen Richtung betrachtet, beispielsweise eine Anordnung aus dem ersten Außenprofilblock, dem ersten Zwischenprofilblock, einem oder mehreren Innenprofilblöcken, dem zweiten Zwischenprofilblock und dem zweiten Außenprofilblock vorliegen.

Auch wenn es theoretisch denkbar wäre, die komplementären ersten und zweiten Blöcke an einem bestimmten Umfangspunkt des Fahrzeugreifens unterschiedlich auszuführen, ist es für im Wesentlichen alle Ausführungsformen explizit bevorzugt, die jeweiligen komplementären Profilblöcke möglichst ähnlich, insbesondere an jedem Umfangspunkt im Wesentlichen spiegelsymmetrisch, auszuführen, wobei es ganz besonders bevorzugt ist, wenn der Fahrzeugreifen bezogen auf das gesamte Laufstreifenprofil spiegelsymmetrisch ausgeführt wird, insbesondere spiegelsymmetrisch zu einer Spiegelebene, welche orthogonal auf der axialen Richtung steht und durch den Mittelpunkt des Laufstreifenprofils verläuft. Bevorzugt ist demnach ein erfindungsgemäßer Fahrzeugreifen, wobei die ersten Außenprofilblöcke zumindest teilweise, bevorzugt überwiegend, besonders bevorzugt vollständig, spiegelsymmetrisch zu einem der zweiten Außenprofilblöcke sind, und/oder wobei die zweiten Außenprofilblöcke zumindest teilweise, bevorzugt überwiegend, besonders bevorzugt vollständig, spiegelsymmetrisch zu einem der ersten Außenprofilblöcke sind. Bevorzugt ist zusätzlich oder alternativ ein erfindungsgemäßer Fahrzeugreifen, wobei die ersten Zwischenprofilblöcke zumindest teilweise, bevorzugt überwiegend, besonders bevorzugt vollständig, spiegelsymmetrisch zu einem der zweiten Zwischenprofilblöcke sind, und/oder wobei die zweiten Zwischenprofilblöcke zumindest teilweise, bevorzugt überwiegend, besonders bevorzugt vollständig, spiegelsymmetrisch zu einem der ersten Zwischenprofilblöcke sind.

Bevorzugt ist zusätzlich oder alternativ ein erfindungsgemäßer Fahrzeugreifen, wobei der profilierte Laufstreifen eine Spiegelebene aufweist, welche orthogonal zu der Rotationsachse steht. Bevorzugt ist entsprechend isoliert betrachtet auch ein erfindungsgemäßer Fahrzeugreifen, wobei gegenüberliegende Außenprofilblöcke zumindest teilweise, bevorzugt überwiegend, besonders bevorzugt vollständig, sowohl hinsichtlich der Form als auch der Positionierung spiegelsymmetrisch zueinander sind, und/oder wobei gegenüberliegende Zwischenprofilblöcke zumindest teilweise, bevorzugt überwiegend, besonders bevorzugt vollständig, sowohl hinsichtlich der Form als auch der Positionierung spiegelsymmetrisch zueinander sind.

Auch wenn es theoretisch denkbar wäre, die Profilblöcke relativ zueinander über den Umfang versetzt anzuordnen, erachten es die Erfinder als vorteilhaft, die entsprechenden Profilblöcke fluchtend zueinander anzuordnen, sodass diese gemeinsam durch fluchtende Quer- oder Schrägprofilrillen ausgebildet werden. Bevorzugt ist ein erfindungsgemäßer Fahrzeugreifen, wobei jedem ersten Zwischenprofilblock ein oder zwei erste Außenprofilblöcke und jedem zweiten Zwischenprofilblock ein oder zwei zweite Außenprofilblöcke zugeordnet sind, wobei der jeweilige Außenprofilblock und der jeweilige Zwischenprofilblock bevorzugt im Wesentlichen fluchtend angeordnet sind.

Die vorstehende Definition der relativen Anordnung der definierten Profilblöcke zueinander bedingt, dass es zumindest theoretisch weitere Profilblöcke geben kann, welche weiter außerhalb liegen als die Außenprofilblöcke oder in radialer Richtung zentraler liegen als die Innenprofilblöcke. Darüber hinaus mag es theoretisch über den Umfang verteilt außenliegende bzw. innenliegende Profilblöcke geben, welche nicht den vorstehend definierten Kriterien der entsprechenden Außenprofilblöcke bzw. Innenprofilblöcke genügen. Die Erfinder der vorliegenden Erfindung schlagen jedoch vor, dass es für im Wesentlichen alle Ausführungsformen bevorzugt ist, die entsprechenden Profilblöcke möglichst weitgehend im Sinne der erfindungsgemäßen Definition auszuführen, wobei auch die zwischenliegenden Profilblöcke bevorzugt möglichst weitgehend als entsprechende Zwischenprofilblöcke der vorstehenden Definition ausgeführt werden sollten.

Bevorzugt ist im Lichte der vorstehenden Ausführungen bezüglich der Außenprofilblöcke ein erfindungsgemäßer Fahrzeugreifen, wobei die ersten Außenprofilblöcke und die zweiten Außenprofilblöcke jeweils die in axiale Richtung äußersten Profilblöcke bilden, und/oder wobei die in axiale Richtung äußersten Profilblöcke zu 80 % oder mehr, bevorzugt 90 % oder mehr, besonders bevorzugt zu 95 % oder mehr, ganz besonders bevorzugt im Wesentlichen zu 100 %, durch erste Außenprofilblöcke oder zweite Außenprofilblöcke gebildet werden.

Bevorzugt ist bezüglich der Innenprofilblöcke ein erfindungsgemäßer Fahrzeugreifen, wobei die Innenprofilblöcke die in axialer Richtung im Zentrum des profilierten Laufstreifens liegenden Profilblöcke bilden, und/oder, wobei die in axialer Richtung im Zentrum des profilierten Laufstreifens liegenden Profilblöcke zu 80 % oder mehr, bevorzugt 90 % oder mehr, besonders bevorzugt zu 95 % oder mehr, ganz besonders bevorzugt im Wesentlichen zu 100 %, durch Innenprofilblöcke gebildet werden.

Bevorzugt ist hinsichtlich der Zwischenprofilblöcke ein erfindungsgemäßer Fahrzeugreifen, wobei die zwischen den ersten Außenprofilblöcken und den Innenprofilblöcken angeordneten Profilblöcke zu 80 % oder mehr, bevorzugt 90 % oder mehr, besonders bevorzugt zu 95 % oder mehr, ganz besonders bevorzugt im Wesentlichen zu 100 %, durch erste Zwischenprofilblöcke gebildet werden, und/oder wobei die zwischen den zweiten Außenprofilblöcken und den Innenprofilblöcken angeordneten Profilblöcke zu 80 % oder mehr, bevorzugt zu 90 % oder mehr, besonders bevorzugt zu 95 % oder mehr, ganz besonders bevorzugt im Wesentlichen zu 100 %, durch zweite Zwischenprofilblöcke gebildet werden.

Erfindungswesentlich ist nunmehr ausgehend von dem vorstehend beschriebenen Grundaufbau die spezifische Strukturierung der Profilblöcke, insbesondere der Außenprofilblöcke und der Zwischenprofilblöcke. Die Außenprofilblöcke und die Zwischenprofilblöcke weisen nämlich erste rillenartige Vertiefungen und zweite rillenartige Vertiefungen auf, welche vom Fachmann -obwohl sie streng genommen zumeist während der Vulkanisation durch die Vulkanisationsform ausgeformt werden- zuweilen auch als Einschnitte bezeichnet werden. Hierbei handelt es sich um rillenartige Ausnehmungen in der Oberfläche der Profilblöcke, welche sich in den Profilblock hinein erstrecken.

Die im Rahmen der vorliegenden Erfindung als erste rillenartige Vertiefungen bezeichneten Ausnehmungen werden vom Fachmann zuweilen auch als Hauptlamellen bezeichnet. Die zweiten rillenartigen Vertiefungen werden vom Fachmann hingegen im Alltag zuweilen auch als sogenannte "cross sipes" bezeichnet. Entsprechende rillenartige Vertiefungen sind dem Fachmann im Bereich der Winterreifen dabei prinzipiell bekannt.

Da, wie nachfolgend eingehender beschrieben, im Rahmen der vorliegenden Erfindung die relative Anordnung dieser rillenartigen Vertiefungen bereits eine zuverlässige Unterscheidung erlaubt, ist eine weitergehende Differenzierung an dieser Stelle nicht zwangsläufig erforderlich. Im Stand der Technik werden die Hauptlamellen und die "cross sipes" jedoch regelmäßig hinsichtlich ihrer Tiefe der Vertiefung unterschieden. Die Hauptlamellen sind dabei regelmäßig tiefer als die eher oberflächlichen "cross sipes".

Bevorzugt ist hinsichtlich der Hauptlamellen ein erfindungsgemäßer Fahrzeugreifen, wobei die ersten rillenartigen Vertiefungen jeweils eine mittlere Rillentiefe im Bereich von 0,2*H_{B} bis 0,95*H_{B}, bevorzugt im Bereich von 0,25*H_{B} bis 0,93*H_{B}, besonders bevorzugt im Bereich von 0,3*H_{B} bis 0,9*H_{B}, aufweisen, wobei H_{B} die maximale Tiefe der Profilrillen des Fahrzeugreifens relativ zu der Kontaktoberfläche ist, und/oder wobei die ersten rillenartigen Vertiefungen jeweils eine mittlere Rillentiefe im Bereich von 1,5 bis 8,5 mm, bevorzugt im Bereich von 2,5 bis 8,25 mm, besonders bevorzugt im Bereich von 3 bis 8 mm, aufweisen. Bevorzugt ist zusätzlich oder alternativ ein erfindungsgemäßer Fahrzeugreifen, wobei die ersten rillenartigen Vertiefungen jeweils eine mittlere Rillenbreite im Bereich von 0,3 bis 3,0 mm, bevorzugt im Bereich von 0,35 bis 2,5 mm, besonders bevorzugt im Bereich von 0,4 bis 2,0 mm, aufweisen.

Bevorzugt ist hinsichtlich der "cross sipes" ein erfindungsgemäßer Fahrzeugreifen, wobei die zweiten rillenartigen Vertiefungen jeweils eine mittlere Rillentiefe von weniger als 0,2*H_{B}, bevorzugt weniger als 0,15*H_{B}, besonders bevorzugt weniger als 0,1*H_{B}, aufweisen, wobei H_{B} die maximale Tiefe der Profilrillen des Fahrzeugreifens relativ zu der Kontaktoberfläche ist, und/oder wobei die zweiten rillenartigen Vertiefungen jeweils eine mittlere Rillentiefe im Bereich von 0,3 bis 2,5 mm, bevorzugt im Bereich von 0,35 bis 2,0 mm, besonders bevorzugt im Bereich von 0,4 bis 1,5 mm, ganz besonders bevorzugt im Bereich von 0,4 bis 1,0 mm, aufweisen. Bevorzugt ist zusätzlich oder alternativ ein erfindungsgemäßer Fahrzeugreifen, wobei die zweiten rillenartigen Vertiefungen jeweils eine mittlere Rillenbreite im Bereich von 0,3 bis 1,2 mm, bevorzugt im Bereich von 0,35 bis 0,8 mm, besonders bevorzugt im Bereich von 0,4 bis 0,6 mm, aufweisen.

Neben den wie vorstehend definierten ersten und zweiten rillenartigen Vertiefungen können in den jeweiligen Profilblöcken darüber hinaus weitere rillenartige Vertiefungen vorgesehen werden, die nicht in die vorstehend gegebene Definition fallen, insbesondere weil sie nicht die notwendige Länge aufweisen. Somit kann es sich bei den weiteren rillenartigen Vertiefungen insbesondere um rillenartige Vertiefungen handeln, welche wegen einer unzureichenden Länge im Rahmen der vorliegenden Erfindung nicht als "cross sipes" angesehen werden, darüber hinaus hinsichtlich der Ausgestaltung, d. h. der typischen Breite, Tiefe und relativen Orientierung zu den Hauptlamellen jedoch in analoger Weise zu "cross sipes" ausgeführt sein können. In diesem Fall handelt es sich um einen erfindungsgemäßen Fahrzeugreifen, wobei die Profilblöcke, insbesondere die Innenprofilblöcke, die ersten Zwischenprofilblöcke und/oder die zweiten Zwischenprofilblöcke, zumindest teilweise, eine oder mehrere, bevorzugt zwei oder mehr, von den ersten rillenartigen Vertiefungen und den zweiten rillenartigen Vertiefungen verschiedene weitere rillenartige Vertiefungen umfassen.

Ein wichtiger Aspekt der vorstehenden Definition ist es, dass sowohl die ersten als auch die zweiten rillenartigen Vertiefungen prinzipiell durchgehende Vertiefungen sein können, aber auch als unterbrochene Vertiefungen ausgeführt werden können. Eine Ausführung als durchgehende Vertiefung ist dabei selbsterklärend, sodass sich die entsprechende Vertiefung als durchgehende Ausnehmung entlang der Rillenrichtung erstreckt, wobei sie potentiell von anderen rillenartigen Vertiefungen gekreuzt werden kann.

Die Erfinder der vorliegenden Erfindung haben aber gefunden, dass sich der gewünschte Effekt entsprechender rillenartiger Vertiefungen in vielen Fällen auch dann erzielen lässt, wenn bei einer gewissen Gesamtrillenlänge, welche kombiniert ein Mindestkriterium erfüllt, die einzelnen Teilbereiche der Rille durch Unterbrechungen voneinander getrennt werden, sodass es sich um eine unterbrochene rillenartige Vertiefung handelt. In der Praxis hat der Fachmann keine Probleme, visuell zu entscheiden, wann zwei benachbarte rillenartige Vertiefungen zwei Bestandteile einer unterbrochenen rillenartigen Vertiefung sind und wann es sich um zwei separate rillenartige Vertiefungen handelt. Tatsächlich stellt die Bewertung dieser Frage für den Fachmann in der Praxis nämlich keine Problematik dar, da sich für den Fachmann aus der Form und der Orientierung der zwei Vertiefungen zwanglos erkennen lässt, ob diese als unterbrochene Vertiefung aufzufassen sind. In Übereinstimmung mit dem fachmännischen Verständnis bilden zwei oder mehr rillenartige Teilvertiefungen dann eine unterbrochene rillenartige Vertiefung, wenn von der den Verlauf nachbildenden Verlängerung der Schwerpunktlinie einer rillenartigen Teilvertiefung kein Abschnitt der weiteren rillenartigen Teilvertiefungen einen größeren Abstand als 1,2*R, bevorzugt 1,1*R, besonders bevorzugt 1,0*R aufweist, wobei R der maximale Abstand eines Teils der ersten Teilvertiefung von der Schwerpunktlinie ist. Dies bedeutet, dass die den Verlauf nachbildende Weiterführung der Schwerpunktlinie einer der ersten rillenartigen Teilvertiefungen so zu den weiteren Teilvertiefungen verläuft, dass deren größter Abstand zu dieser gedanklichen Verlängerung um nicht mehr als 20 %, bevorzugt nicht mehr als 10 %, besonders bevorzugt im Wesentlichen gar nicht, größer ist als der Abstand von der Schwerpunktlinie, der sich in der betrachteten ersten Teilvertiefung ergibt. Unter Annahme einer Toleranz von 20 % bzw. bevorzugt von 10 % wird im Rahmen der vorliegenden Erfindung damit auch dann von einer unterbrochenen rillenartigen Vertiefung ausgegangen, wenn die Teilvertiefungen leicht versetzt und/oder mit leicht anderen Steigungen ausgeführt werden, sodass eine gewissen Toleranz zugrunde gelegt wird, die insbesondere die Fertigungstoleranzen berücksichtigt. Besonders bevorzugt handelt es sich bei den unterbrochenen rillenartigen Vertiefungen um solche unterbrochenen rillenartigen Vertiefungen, deren Teilvertiefungen Schwerpunktlinien aufweisen, auf deren gedanklicher Verlängerung jeweils sämtliche Teilvertiefungen liegen. Ganz besonders bevorzugt sind unterbrochene rillenartige Vertiefungen, deren Schwerpunktlinien auf einer Geraden liegen. Insbesondere bevorzugt sind unterbrochene rillenartige Vertiefungen, deren rillenartige Teilvertiefungen sämtlich auf einer Geraden oder einem Kreisbogen liegen.

Nach Einschätzung der Erfinder ist es vor allem für die Hauptlamellen vorteilhaft, diese möglichst weitgehend als durchgehende Vertiefungen auszuführen. Im Gegensatz hierzu haben die Erfinder für die zweiten rillenartigen Vertiefungen, d. h. für die "cross sipes", besonders vorteilhafte Ergebnisse dann erzielt, wenn diese zumindest teilweise und bevorzugt möglichst weitgehend als unterbrochene rillenartige Vertiefungen ausgeführt werden. Bevorzugt ist folglich ein erfindungsgemäßer Fahrzeugreifen, wobei die ersten rillenartigen Vertiefungen zumindest teilweise, bevorzugt überwiegend, besonders bevorzugt sämtlich, durchgehende rillenartige Vertiefungen sind. Erfindungsgemäß ist ein erfindungsgemäßer Fahrzeugreifen, wobei die zweiten rillenartigen Vertiefungen zumindest teilweise, bevorzugt überwiegend, besonders bevorzugt sämtlich, unterbrochene rillenartige Vertiefungen sind, umfassend zwei oder mehr, bevorzugt drei oder mehr, rillenartige Teilvertiefungen, wobei die rillenartigen Teilvertiefungen bevorzugt auf einer Gerade oder einem Kreisbogen liegen.

Der Fachmann versteht, dass es sich sowohl bei den Hauptlamellen als auch den "cross sipes" um rillenartige Vertiefungen handelt, die mit einer gewissen Rillenlänge einhergehen, sodass sie klar von beispielsweise kreisrunden Vertiefungen unterschieden werden können. Um dies zum Ausdruck zu bringen, wird vorstehend sowohl für die ersten rillenartigen Vertiefungen als auch für die zweiten rillenartigen Vertiefungen jeweils eine Mindestgesamtrillenlänge definiert, wobei im Falle von bspw. gewundenen rillenartigen Vertiefungen auch die Windungen berücksichtigt werden. Im Fall von unterbrochenen rillenartigen Vertiefungen handelt es sich bei der Gesamtrillenlänge um die Summe der Rillenlängen der Teilvertiefungen. Die Gesamtrillenlänge der ersten rillenartigen Vertiefungen, d. h. der Hauptlamellen, wird relativ zu der maximalen Länge des jeweiligen Profilblocks in axialer Richtung, d. h. orthogonal zur Umfangsrichtung, bemessen. Die Mindestgesamtrillenlänge der zweiten rillenartigen Vertiefungen, d. h. der "cross sipes" wird im Gegensatz hierzu relativ zu der Breite des Profilblocks in Umfangsrichtung definiert. Die Erfinder haben insoweit erkannt, dass es vorteilhaft ist, die rillenartigen Vertiefungen jeweils mit einer möglichst großen Gesamtrillenlänge auszuführen. Bevorzugt ist nämlich zunächst ein erfindungsgemäßer Fahrzeugreifen, wobei die ersten rillenartigen Vertiefungen jeweils eine Gesamtrillenlänge von 0,8*L_{B} oder mehr, bevorzugt von 0,9*L_{B} oder mehr, besonders bevorzugt von 1,0*L_{B} oder mehr aufweisen. Bevorzugt ist zusätzlich oder alternativ ein erfindungsgemäßer Fahrzeugreifen, wobei die zweiten rillenartigen Vertiefungen jeweils eine Gesamtrillenlänge von 0,55*B_{B} oder mehr, bevorzugt von 0,6*B_{B} oder mehr, besonders bevorzugt von 0,65*B_{B} oder mehr aufweisen.

In Übereinstimmung mit der üblichen Praxis im Bereich der Profilgestaltung von Laufstreifen können die Kanten von Profilblöcken an den Rändern durch anfasen leicht angeschrägt sein und/oder in den Seitenbereichen abgeflacht sein. Insoweit dies für die Bewertung der Gesamtrillenlänge bei der Festlegung der Bezugsgrößen L_{B} bzw. B_{B} relevant wird, erfolgt die Bestimmung der Bezugsgrößen L_{B} bzw. B_{B} am Fuß der jeweiligen Profilblöcke, d.h. auf der durch die Profilrillen vorgegebenen Höhe.

Hinsichtlich der Form der rillenartigen Vertiefungen schlagen die Erfinder vor, dass die Hauptlamellen zur Realisierung einer möglichst hohen Gesamtrillenlänge bevorzugt mäandernd ausgeführt werden können, insbesondere als gewundene oder abgestufte, d. h. insbesondere zickzackförmige, Rillen. Im Gegensatz hierzu erachten es die Erfinder für besonders vorteilhaft, die "cross sipes" möglichst als gerade oder gekrümmte Linien auszuführen, sodass die "cross sipes" bzw. deren Teilvertiefungen auf einer Gerade oder einem gekrümmten Kreisbogen liegen. Bevorzugt ist ein erfindungsgemäßer Fahrzeugreifen, wobei die ersten rillenartigen Vertiefungen zumindest teilweise, bevorzugt überwiegend, besonders bevorzugt sämtlich, zumindest abschnittsweise als gewundene und/oder abgestufte Rillen, bevorzugt als gewundene Rillen, ausgeführt sind. Bevorzugt ist zusätzlich oder alternativ ein erfindungsgemäßer Fahrzeugreifen, wobei die zweiten rillenartigen Vertiefungen zumindest teilweise, bevorzugt überwiegend, besonders bevorzugt sämtlich, gerade oder gekrümmte, bevorzugt gerade, rillenartige Vertiefungen sind.

Die verschiedenen Profilblöcke, beispielsweise die ersten Außenprofilblöcke und die Innenprofilblöcke, sind in der vorstehenden Definition an bestimmte Kriterien gebunden. Hierbei ist es jedoch jeweils nicht notwendig, dass sämtliche der entsprechenden Profilblöcke, beispielsweise sämtliche erste Außenprofilblöcke und sämtliche Innenprofilblöcke gleichartig ausgeführt werden. Tatsächlich ist es nicht nur möglich, sondern auch in vielen Fällen bevorzugt, wenn bei der "Verpitchung" des Laufstreifenprofils in jeder Profilblockkategorie zwei oder mehr und besonders bevorzugt drei oder mehr verschiedene Blöcke auftreten, wobei sich diese insbesondere hinsichtlich deren Form, d. h. deren Längen- und Breitenabmessung sowie gegebenenfalls Konturierung sowie insbesondere hinsichtlich der Zahl der ersten bzw. zweiten rillenartigen Vertiefungen oder deren Ausrichtung unterscheiden können, wobei es insbesondere bevorzugt ist, die Zahl und Ausrichtung der zweiten rillenartigen Vertiefungen für alle Profilblöcke der jeweiligen Kategorie gleichmäßig zu wählen und stattdessen die Zahl der ersten rillenartigen Vertiefungen zu verändern.

Bevorzugt ist vor diesem Hintergrund für die Außenprofilblöcke ein erfindungsgemäßer Fahrzeugreifen, wobei der Laufstreifen als Profilblöcke zwei oder mehr, bevorzugt drei oder mehr, unterschiedliche erste Außenprofilblöcke umfasst, wobei sich die unterschiedlichen ersten Außenprofilblöcke untereinander bevorzugt hinsichtlich der Form der ersten Außenprofilblöcke und/oder hinsichtlich der Zahl der ersten rillenartigen Vertiefungen und/oder hinsichtlich der Zahl der zweiten rillenartigen Vertiefungen und/oder hinsichtlich der relativen Ausrichtung der ersten rillenartigen Vertiefungen und der zweiten rillenartigen Vertiefungen, bevorzugt hinsichtlich der Form der ersten Außenprofilblöcke und hinsichtlich der Zahl der ersten rillenartigen Vertiefungen, unterscheiden, und/oder wobei der Laufstreifen als Profilblöcke zwei oder mehr, bevorzugt drei oder mehr, unterschiedliche zweite Außenprofilblöcke umfasst, wobei sich die unterschiedlichen zweiten Außenprofilblöcke untereinander bevorzugt hinsichtlich der Form der zweiten Außenprofilblöcke und/oder hinsichtlich der Zahl der ersten rillenartigen Vertiefungen und/oder hinsichtlich der Zahl der zweiten rillenartigen Vertiefungen und/oder hinsichtlich der relativen Ausrichtung der ersten rillenartigen Vertiefungen und der zweiten rillenartigen Vertiefungen, bevorzugt hinsichtlich der Form der ersten Außenprofilblöcke und hinsichtlich der Zahl der ersten rillenartigen Vertiefungen, unterscheiden.

Bevorzugt ist hinsichtlich der Zwischenprofilgblöcke ein erfindungsgemäßer Fahrzeugreifen, wobei der Laufstreifen als Profilblöcke zwei oder mehr, bevorzugt drei oder mehr, besonders bevorzugt genau drei, unterschiedliche erste Zwischenprofilblöcke umfasst, wobei sich die unterschiedlichen ersten Zwischenprofilblöcke untereinander bevorzugt hinsichtlich der Form der ersten Zwischenprofilblöcke und/oder hinsichtlich der Zahl der ersten rillenartigen Vertiefungen und/oder hinsichtlich der Zahl der zweiten rillenartigen Vertiefungen und/oder hinsichtlich der relativen Ausrichtung der ersten rillenartigen Vertiefungen und der zweiten rillenartigen Vertiefungen, bevorzugt hinsichtlich der Form der ersten Zwischenprofilblöcke und hinsichtlich der Zahl der ersten rillenartigen Vertiefungen, unterscheiden, und/oder wobei der Laufstreifen als Profilblöcke zwei oder mehr, bevorzugt drei oder mehr, besonders bevorzugt genau drei, unterschiedliche zweite Zwischenprofilblöcke umfasst, wobei sich die unterschiedlichen zweiten Zwischenprofilblöcke untereinander bevorzugt hinsichtlich der Form der zweiten Zwischenprofilblöcke und/oder hinsichtlich der Zahl der ersten rillenartigen Vertiefungen und/oder hinsichtlich der Zahl der zweiten rillenartigen Vertiefungen und/oder hinsichtlich der relativen Ausrichtung der ersten rillenartigen Vertiefungen und der zweiten rillenartigen Vertiefungen, bevorzugt hinsichtlich der Form der ersten Zwischenprofilblöcke und hinsichtlich der Zahl der ersten rillenartigen Vertiefungen, unterscheiden.

Bevorzugt ist bezüglich der Innenprofilblöcke ein erfindungsgemäßer Fahrzeugreifen, wobei der Laufstreifen als Profilblöcke zwei oder mehr, bevorzugt genau zwei, unterschiedliche Innenprofilblöcke umfasst. Bevorzugt ist insoweit ebenfalls ein erfindungsgemäßer Fahrzeugreifen, wobei sich die unterschiedlichen Innenprofilblöcke untereinander hinsichtlich der Form der Innenprofilblöcke und/oder hinsichtlich der Zahl der ersten rillenartigen Vertiefungen, bevorzugt hinsichtlich der Form der Innenprofilblöcke und hinsichtlich der Zahl der ersten rillenartigen Vertiefungen, unterscheiden, oder wobei die unterschiedlichen Innenprofilblöcke zueinander spiegelsymmetrisch sind.

Die Erfinder haben es als vorteilhaft identifiziert, in den Außenprofilblöcken und/oder den Zwischenprofilblöcken mehrere Hauptlamellen vorzusehen, zumindest bezogen auf die überwiegende Zahl der Profilblöcke der jeweiligen Kategorie, wobei es nach Einschätzung der Erfinder in einigen Anwendungsfällen alternativ auch vorteilhaft sein kann, schmalere Blöcke vorzusehen, in denen lediglich eine erste rillenartige Vertiefung vorgesehen wird. Bevorzugt ist entsprechend ein erfindungsgemäßer Fahrzeugreifen, wobei die ersten Außenprofilblöcke und/oder die zweiten Außenprofilblöcke, bevorzugt die ersten Außenprofilblöcke und die zweiten Außenprofilblöcke, zumindest teilweise, bevorzugt überwiegend, zwei oder mehr, bevorzugt drei oder mehr, erste rillenartige Vertiefungen umfassen. Bevorzugt ist zusätzlich oder alternativ ein erfindungsgemäßer Fahrzeugreifen, wobei die ersten Zwischenprofilblöcke und/oder die zweiten Zwischenprofilblöcke, bevorzugt die ersten Zwischenprofilblöcke und die zweiten Zwischenprofilblöcke, zumindest teilweise, bevorzugt überwiegend, zwei oder mehr, bevorzugt drei oder mehr, erste rillenartige Vertiefungen umfassen.

Besonders günstige Ergebnisse hinsichtlich der Fahreigenschaften werden dabei nach Einschätzung der Erfinder erzielt, wenn die Varianz in der Formgestaltung der ersten rillenartigen Vertiefungen niedrig gehalten wird, sodass es beispielsweise nur eine oder zwei, bevorzugt lediglich eine Formgestaltung der Hauptlamellen gibt, welche bevorzugt im Wesentlichen parallel und dabei darüber hinaus bevorzugt im Wesentlichen äquidistant zueinander angeordnet sein können.

Bevorzugt ist für die Außenprofilblöcke folglich ein erfindungsgemäßer Fahrzeugreifen, wobei die ersten Außenprofilblöcke und/oder die zweiten Außenprofilblöcke, bevorzugt die ersten Außenprofilblöcke und die zweiten Außenprofilblöcke, zumindest teilweise, bevorzugt überwiegend, erste rillenartige Vertiefungen umfassen, welche bezogen auf den jeweiligen Profilblock, bevorzugt bezogen auf sämtliche der entsprechenden Profilblöcke, die gleiche Rillenform aufweisen. Bevorzugt ist zusätzlich oder alternativ ein erfindungsgemäßer Fahrzeugreifen, wobei die ersten Außenprofilblöcke und/oder die zweiten Außenprofilblöcke, bevorzugt die ersten Außenprofilblöcke und die zweiten Außenprofilblöcke, zumindest teilweise, bevorzugt überwiegend, zwei oder mehr zueinander parallele erste rillenartige Vertiefungen umfassen, bevorzugt drei oder mehr äquidistant angeordnete zueinander parallele erste rillenartige Vertiefungen.

Bevorzugt ist für die Zwischenprofilblöcke alternativ ein erfindungsgemäßer Fahrzeugreifen, wobei die ersten Zwischenprofilblöcke und/oder die zweiten Zwischenprofilblöcke, bevorzugt die ersten Zwischenprofilblöcke und die zweiten Zwischenprofilblöcke, zumindest teilweise, bevorzugt überwiegend, erste rillenartige Vertiefungen umfassen, welche bezogen auf den jeweiligen Profilblock, bevorzugt bezogen auf sämtliche der entsprechenden Profilblöcke, die gleiche Rillenform aufweisen. Bevorzugt ist zusätzlich oder alternativ ein erfindungsgemäßer Fahrzeugreifen, wobei die ersten Zwischenprofilblöcke und/oder die zweiten Zwischenprofilblöcke, bevorzugt die ersten Zwischenprofilblöcke und die zweiten Zwischenprofilblöcke, zumindest teilweise, bevorzugt überwiegend, zwei oder mehr zueinander parallele erste rillenartige Vertiefungen umfassen, bevorzugt drei oder mehr, wobei der Abstand zwischen zwei benachbarten parallelen ersten rillenartigen Vertiefungen bezogen auf den Zwischenprofilblock, bevorzugt bezogen auf sämtliche Zwischenprofilblöcke, um weniger als 15 %, bevorzugt weniger als 10 %, variiert, wobei die parallelen ersten rillenartigen Vertiefungen besonders bevorzugt äquidistant angeordnete zueinander angeordnet sind.

Ein wesentlicher Aspekt der erfindungsgemäßen Fahrzeugreifen ist es, dass sowohl in den Außenprofilblöcken als auch in den Zwischenprofilblöcken eine relativ hohe Anzahl an "cross sipes" vorgesehen wird, da diese jeweils zumindest drei zweite rillenartige Vertiefungen umfassen, die darüber hinaus -wie nachfolgend erläutert- zu den Hauptlamellen eine bestimmte Orientierung aufweisen. In den Studien der Erfinder hat sich dabei der Einsatz von jeweils drei "cross sipes" als besonders vorteilhaft und auch mit Blick auf die Fertigungseffizienz günstig erwiesen. Grundsätzlich wäre es jedoch auch möglich, eine noch größere Zahl an "cross sipes" vorzusehen. Denkbar ist insoweit ein erfindungsgemäßer Fahrzeugreifen, wobei die ersten Außenprofilblöcke und/oder die zweiten Außenprofilblöcke, bevorzugt die ersten Außenprofilblöcke und die zweiten Außenprofilblöcke, zumindest teilweise, bevorzugt überwiegend, besonders bevorzugt sämtlich, vier oder mehr zweite rillenartige Vertiefungen umfassen. Bevorzugt ist alternativ jedoch ein erfindungsgemäßer Fahrzeugreifen, wobei die ersten Außenprofilblöcke und/oder die zweiten Außenprofilblöcke, bevorzugt die ersten Außenprofilblöcke und die zweiten Außenprofilblöcke, zumindest teilweise, bevorzugt überwiegend, besonders bevorzugt sämtlich, genau drei zweite rillenartige Vertiefungen umfassen. Bevorzugt ist wiederum zusätzlich oder alternativ ein erfindungsgemäßer Fahrzeugreifen, wobei die ersten Zwischenprofilblöcke und/oder die zweiten Zwischenprofilblöcke, bevorzugt die ersten Zwischenprofilblöcke und die zweiten Zwischenprofilblöcke, zumindest teilweise, bevorzugt überwiegend, besonders bevorzugt ausschließlich, genau drei zweite rillenartige Vertiefungen umfassen.

Auch wenn es die Erfinder als vorteilhaft identifiziert haben, die "cross sipes" mit einer geraderen Linienführung auszuführen, wurde auch für diese zweiten rillenartigen Vertiefungen gefunden, dass die Wahl einer möglichst gleichmäßigen Rillenform und eine parallele sowie bevorzugt auch äquidistante Anordnung zueinander sowohl in den Außenprofilblöcken als auch den Zwischenprofilblöcken besonders vorteilhaft ist.

Bevorzugt ist demgemäß für die Außenprofilblöcke zunächst ein erfindungsgemäßer Fahrzeugreifen, wobei die ersten Außenprofilblöcke und/oder die zweiten Außenprofilblöcke, bevorzugt die ersten Außenprofilblöcke und die zweiten Außenprofilblöcke, zumindest teilweise, bevorzugt überwiegend, besonders bevorzugt sämtlich, zweite rillenartige Vertiefungen umfassen, welche bezogen auf den jeweiligen Profilblock, bevorzugt bezogen auf sämtliche der entsprechenden Profilblöcke, die gleiche Rillenform aufweisen. Bevorzugt ist zusätzlich oder alternativ ein erfindungsgemäßer Fahrzeugreifen, wobei die ersten Außenprofilblöcke und/oder die zweiten Außenprofilblöcke, bevorzugt die ersten Außenprofilblöcke und die zweiten Außenprofilblöcke, zumindest teilweise, bevorzugt überwiegend, besonders bevorzugt ausschließlich, zwei oder mehr zueinander parallele zweite rillenartige Vertiefungen umfassen, bevorzugt drei oder mehr äquidistant angeordnete zueinander parallele zweite rillenartige Vertiefungen.

Bevorzugt ist für die Zwischenprofilblöcke ein erfindungsgemäßer Fahrzeugreifen, wobei die ersten Zwischenprofilblöcke und/oder die zweiten Zwischenprofilblöcke, bevorzugt die ersten Zwischenprofilblöcke und die zweiten Zwischenprofilblöcke, zumindest teilweise, bevorzugt überwiegend, besonders bevorzugt ausschließlich, zweite rillenartige Vertiefungen umfassen, welche bezogen auf den jeweiligen Profilblock, bevorzugt bezogen auf sämtliche der entsprechenden Profilblöcke, die gleiche Rillenform aufweisen. Bevorzugt ist zusätzlich oder alternativ ein erfindungsgemäßer Fahrzeugreifen, wobei die ersten Zwischenprofilblöcke und/oder die zweiten Zwischenprofilblöcke, bevorzugt die ersten Zwischenprofilblöcke und die zweiten Zwischenprofilblöcke, zumindest teilweise, bevorzugt überwiegend, besonders bevorzugt ausschließlich, zwei oder mehr zueinander parallele zweite rillenartige Vertiefungen umfassen, bevorzugt drei oder mehr äquidistant angeordnete zueinander parallele zweite rillenartige Vertiefungen.

Neben der relativ großen Anzahl der "cross sipes" ist erfindungsgemäß vorgesehen, dass sich die Schwerpunktlinien der "cross sipes" mit der Schwerpunktlinie zumindest einer Hauptlamelle derart schneiden, dass ein Schnittwinkel erhalten wird, welcher unterhalb von 90° liegt, sodass die "cross sipes" relativ zu den Hauptlamellen schräg verlaufen. Da die ersten und zweiten rillenartigen Vertiefungen selbst als gewundene rillenartige Vertiefungen ausgeführt werden können, erfolgt die Definition des Schnittwinkels in Bezug auf die Schwerpunktlinie, wie es auch das menschliche Auge bei der visuellen Bewertung annehmen würde. In Übereinstimmung mit dem fachmännischen Verständnis ist die Schwerpunktlinie einer rillenartigen Vertiefung die Linie, für die sich die kleinste Summe der Abstandsquadrate ergibt, wobei im Falle von unterbrochenen rillenartigen Vertiefungen die Gesamtschwerpunktlinie betrachtet wird. Auch wenn vorstehend die Orientierung nur in Bezug auf eine der Hauptlamellen angegeben ist, ist es bevorzugt, wenn die "cross sipes" mit sämtlichen der ersten rillenartigen Vertiefungen einen entsprechenden Winkel einschließen, wobei der Winkel bevorzugt jeweils möglichst gleich ist. Bevorzugt ist somit zunächst ein erfindungsgemäßer Fahrzeugreifen, wobei die ersten Außenprofilblöcke und/oder die zweiten Außenprofilblöcke, bevorzugt die ersten Außenprofilblöcke und die zweiten Außenprofilblöcke, zumindest teilweise, bevorzugt überwiegend, besonders bevorzugt sämtlich, drei oder mehr zweite rillenartige Vertiefungen umfassen, deren Schwerpunktlinien mit den Schwerpunktlinien von zwei oder mehr, bevorzugt von sämtlichen ersten rillenartigen Vertiefungen des Profilblocks einen Schnittwinkel im Bereich von 30° bis 89° einschließen. Bevorzugt ist zusätzlich oder alternativ ein erfindungsgemäßer Fahrzeugreifen, wobei die ersten Zwischenprofilblöcke und/oder die zweiten Zwischenprofilblöcke, bevorzugt die ersten Zwischenprofilblöcke und die zweiten Zwischenprofilblöcke, zumindest teilweise, bevorzugt überwiegend, besonders bevorzugt sämtlich, drei oder mehr zweite rillenartige Vertiefungen umfassen, deren Schwerpunktlinien mit den Schwerpunktlinien von zwei oder mehr, bevorzugt von sämtlichen ersten rillenartigen Vertiefungen des Profilblocks einen Schnittwinkel im Bereich von 30° bis 89° einschließen.

Hinsichtlich der geneigten Anordnung der "cross sipes" relativ zu den Hauptlamellen haben es die Erfinder als besonders bevorzugt identifiziert, die Schnittwinkel spürbar kleiner als 90° zu wählen. Bevorzugt ist nämlich ein erfindungsgemäßer Fahrzeugreifen, wobei die ersten Außenprofilblöcke und/oder die zweiten Außenprofilblöcke, bevorzugt die ersten Außenprofilblöcke und die zweiten Außenprofilblöcke, zumindest teilweise, bevorzugt überwiegend, besonders bevorzugt ausschließlich, drei oder mehr zweite rillenartige Vertiefungen umfassen, deren Schwerpunktlinien mit der Schwerpunktlinie zumindest einer ersten rillenartigen Vertiefung einen Schnittwinkel im Bereich von 35° bis 87°, bevorzugt im Bereich von 40° bis 85°, besonders bevorzugt im Bereich von 50° bis 83°, ganz besonders bevorzugt im Bereich von 60° bis 81°, einschließen. Bevorzugt ist zusätzlich oder alternativ ein erfindungsgemäßer Fahrzeugreifen, wobei die ersten Zwischenprofilblöcke und/oder die zweiten Zwischenprofilblöcke, bevorzugt die ersten Zwischenprofilblöcke und die zweiten Zwischenprofilblöcke, zumindest teilweise, bevorzugt überwiegend, besonders bevorzugt ausschließlich, drei oder mehr zweite rillenartige Vertiefungen umfassen, deren Schwerpunktlinien mit der Schwerpunktlinie zumindest einer ersten rillenartigen Vertiefung einen Schnittwinkel im Bereich von 35° bis 87°, bevorzugt im Bereich von 40° bis 85°, besonders bevorzugt im Bereich von 50° bis 83°, ganz besonders bevorzugt im Bereich von 60° bis 81°, einschließen.

Im Vergleich zwischen den Außenprofilblöcken und den Zwischenprofilblöcken haben es die Erfinder als bevorzugt identifiziert, dass die "cross sipes" relativ zu den Hauptlamellen in den Außenprofilblöcken etwas steiler gewählt werden als in den Zwischenprofilblöcken, wobei der Unterschied nach Einschätzung der Erfinder jedoch auch nicht zu ausgeprägt sein sollte. Bevorzugt ist ein erfindungsgemäßer Fahrzeugreifen, wobei die ersten Zwischenprofilblöcke und/oder die zweiten Zwischenprofilblöcke, bevorzugt die ersten Zwischenprofilblöcke und die zweiten Zwischenprofilblöcke, zumindest teilweise, bevorzugt überwiegend, besonders bevorzugt ausschließlich, zweite rillenartige Vertiefungen umfassen, deren kleinerer Schnittwinkel mit der Schwerpunktlinie zumindest einer ersten rillenartigen Vertiefung, größer ist als der entsprechende Schnittwinkel der zweiten rillenartigen Vertiefungen mit der Schwerpunktlinie zumindest einer ersten rillenartigen Vertiefung der jeweils außenliegenden Außenprofilblöcke, bevorzugt um 4° oder mehr kleiner, besonders bevorzugt um 6° oder mehr kleiner, besonders bevorzugt um 8° oder mehr, kleiner. Bevorzugt ist zusätzlich oder alternativ ein erfindungsgemäßer Fahrzeugreifen, wobei die ersten Zwischenprofilblöcke und/oder die zweiten Zwischenprofilblöcke, bevorzugt die ersten Zwischenprofilblöcke und die zweiten Zwischenprofilblöcke, zumindest teilweise, bevorzugt überwiegend, besonders bevorzugt ausschließlich, zweite rillenartige Vertiefungen umfassen, deren Schnittwinkel mit der Schwerpunktlinie zumindest einer ersten rillenartigen Vertiefung, sich um weniger als 30°, bevorzugt weniger als 25°, besonders bevorzugt weniger als 20°, von dem entsprechenden Schnittwinkel der zweiten rillenartigen Vertiefungen mit der Schwerpunktlinie zumindest einer ersten rillenartigen Vertiefung der jeweils außenliegenden Außenprofilblöcke unterscheidet.

Als besonders bevorzugt erachten es die Erfinder zudem, wenn die "cross sipes" in einem laufrichtungsgebundenen Fahrzeugreifen relativ zur Umfangsrichtung in spezifischer Weise orientiert sind. Hierbei hat es sich auch isoliert jeweils als vorteilhaft erwiesen, die "cross sipes" der Außenprofilblöcke so auszuführen, dass diese entlang der Laufrichtung betrachtet in Richtung der Mitte des profilierten Laufstreifens weisen, während bezogen auf die Zwischenblöcke eine entgegengesetzte Orientierung als besonders günstig identifiziert wurde, bei der die zweiten rillenartigen Vertiefungen in Laufrichtung betrachtet nach außen weisen. Ganz besonders bevorzugte Ausgestaltungen ergeben sich dann, wenn die entsprechenden Orientierungen miteinander kombiniert werden, sodass sich links und rechts der Mitte des profilierten Laufstreifens jeweils eine quasi V-förmige Orientierung der "cross sipes" der Außenprofilblöcke und der Zwischenprofilblöcke ergibt. Bevorzugt ist ein erfindungsgemäßer Fahrzeugreifen, wobei der Fahrzeugreifen ein laufrichtungsgebundener Fahrzeugreifen ist, wobei die ersten Außenprofilblöcke und/oder die zweiten Außenprofilblöcke, bevorzugt die ersten Außenprofilblöcke und die zweiten Außenprofilblöcke, zumindest teilweise, bevorzugt überwiegend, besonders bevorzugt ausschließlich, drei oder mehr zweite rillenartige Vertiefungen umfassen, welche in Laufrichtung in Richtung der Innenprofilblöcke weisen, bevorzugt mit einer Steigung von 5° oder mehr, bevorzugt von 7° oder mehr, besonders bevorzugt von 9° oder mehr, bezogen auf den in Laufrichtung weisenden Schnittwinkel mit der Umfangsrichtung. Bevorzugt ist zusätzlich oder alternativ ein erfindungsgemäßer Fahrzeugreifen, wobei der Fahrzeugreifen ein laufrichtungsgebundener Fahrzeugreifen ist, wobei die ersten Zwischenprofilblöcke und/oder die zweiten Zwischenprofilblöcke, bevorzugt die ersten Zwischenprofilblöcke und die zweiten Zwischenprofilblöcke, zumindest teilweise, bevorzugt überwiegend, besonders bevorzugt sämtlich, drei oder mehr zweite rillenartige Vertiefungen umfassen, welche in Laufrichtung von den Innenprofilblöcken wegweisen, bevorzugt mit einer Steigung von 10° oder mehr, bevorzugt von 15° oder mehr, besonders bevorzugt von 20° oder mehr, ganz besonders bevorzugt von 25° oder mehr, bezogen auf den in Laufrichtung weisenden Schnittwinkel mit der Umfangsrichtung.

In den Versuchen der Erfinder hat sich als besonders vorteilhaft erwiesen, wenn die "cross sipes" zumindest teilweise, bevorzugt überwiegend, insbesondere bevorzugt sämtlich, mit den Hauptlamellen verbunden sind. Mit anderen Worten ist es bevorzugt, wenn sich die ersten und zweiten rillenartigen Vertiefungen derart schneiden, dass die jeweiligen rillenartigen Vertiefungen fließend ineinander übergehen und entsprechend quasi als kombinierte Vertiefung angesehen werden können. In diesem Fall handelt es sich um einen erfindungsgemäßen Fahrzeugreifen, wobei die ersten Außenprofilblöcke und/oder die zweiten Außenprofilblöcke, bevorzugt die ersten Außenprofilblöcke und die zweiten Außenprofilblöcke, zumindest teilweise, bevorzugt überwiegend, besonders bevorzugt sämtlich, eine oder mehrere erste rillenartige Vertiefungen umfassen, die mit einer oder mehreren der zweiten rillenartigen Vertiefungen verbunden sind, wobei besonders bevorzugt jede Teilvertiefung der zweiten rillenartigen Vertiefungen mit genau einer ersten rillenartigen Vertiefung verbunden ist. Bevorzugt ist zusätzlich oder alternativ ein erfindungsgemäßer Fahrzeugreifen, wobei die ersten Zwischenprofilblöcke und/oder die zweiten Zwischenprofilblöcke, bevorzugt die ersten Zwischenprofilblöcke und die zweiten Zwischenprofilblöcke, zumindest teilweise, bevorzugt überwiegend, besonders bevorzugt sämtlich, eine oder mehrere erste rillenartige Vertiefungen umfassen, die mit einer oder mehreren der zweiten rillenartigen Vertiefungen verbunden sind, wobei besonders bevorzugt jede Teilvertiefung der zweiten rillenartigen Vertiefungen mit genau einer ersten rillenartigen Vertiefung verbunden ist..

Für bestimmte Ausgestaltungen ist es aber auch denkbar, dass die "cross sipes" nicht mit den Hauptlamellen verbunden sind, sodass sie beispielsweise durch eine dünne Wandung voneinander getrennt werden. Bevorzugt ist in diesem Fall ein erfindungsgemäßer Fahrzeugreifen, wobei die ersten Außenprofilblöcke und/oder die zweiten Außenprofilblöcke, bevorzugt die ersten Außenprofilblöcke und die zweiten Außenprofilblöcke, zumindest teilweise, bevorzugt überwiegend, besonders bevorzugt sämtlich, eine oder mehrere zweite rillenartige Vertiefungen umfassen, die nicht mit einer der ersten rillenartigen Vertiefungen verbunden sind. Bevorzugt ist zusätzlich oder alternativ ein erfindungsgemäßer Fahrzeugreifen, wobei die ersten Zwischenprofilblöcke und/oder die zweiten Zwischenprofilblöcke, bevorzugt die ersten Zwischenprofilblöcke und die zweiten Zwischenprofilblöcke, zumindest teilweise, bevorzugt überwiegend, besonders bevorzugt sämtlich, eine oder mehrere zweite rillenartige Vertiefungen umfassen, die nicht mit einer der ersten rillenartigen Vertiefungen verbunden sind.

Mit Blick auf die Ausgestaltung der "cross sipes" in den Zwischenprofilblöcken und den Außenprofilblöcken haben es die Erfinder als besonders vorteilhaft identifiziert, die "cross sipes" in den Außenprofilblöcken flacher auszuführen als in den Zwischenprofilblöcken. Bevorzugt ist nämlich ein erfindungsgemäßer Fahrzeugreifen, wobei die ersten Zwischenprofilblöcke und/oder die zweiten Zwischenprofilblöcke, bevorzugt die ersten Zwischenprofilblöcke und die zweiten Zwischenprofilblöcke, zumindest teilweise, bevorzugt überwiegend, besonders bevorzugt sämtlich, zweite rillenartige Vertiefungen umfassen, deren mittlere Rillentiefe größer ist als die mittlere Rillentiefe der zweiten rillenartigen Vertiefungen der jeweils außenliegenden Außenprofilblöcke.

Nach Einschätzung der Erfinder resultieren die vorteilhaften Eigenschaften erfindungsgemäßer Fahrzeugluftreifen insbesondere aus der vorteilhaften Ausgestaltung der Außenprofilblöcke und der Zwischenprofilblöcke. Insoweit kann es als Vorteil der erfindungsgemäßen Fahrzeugreifen gesehen werden, dass diese hinsichtlich der Ausgestaltung der zentralliegenden Innenprofilblöcke prinzipiell relativ flexibel sind und dem Fachmann einiges an Optimierungsspielraum lassen. Trotz dieser prinzipiellen Flexibilität bei der Ausgestaltung der Innenprofilblöcke schlagen die Erfinder vor, dass in vorteilhaften Ausgestaltungen auch die Innenprofilblöcke mit Hauptlamellen und "cross sipes" ausgeführt werden sollten, um besonders vorteilhafte Leistungseigenschaften zu erreichen.

Beispielhaft ist zunächst ein erfindungsgemäßer Fahrzeugreifen, wobei der Fahrzeugreifen an jeder Umfangsposition genau einen Innenprofilblock umfasst, oder wobei der Fahrzeugreifen an jeder Umfangsposition zwei oder mehr Innenprofilblöcke umfasst, wobei die Innenprofilblöcke jeweils nebeneinander angeordnet sind.

Bevorzugt ist hinsichtlich der Oberflächengestaltung ein erfindungsgemäßer Fahrzeugreifen, wobei die Innenprofilblöcke zumindest teilweise, bevorzugt überwiegend, besonders bevorzugt sämtlich, zwei oder mehr, bevorzugt drei oder mehr, erste rillenartige Vertiefungen umfassen, und/oder wobei die Innenprofilblöcke zumindest teilweise, bevorzugt überwiegend, besonders bevorzugt sämtlich, zwei bis sechs, bevorzugt drei bis fünf, erste rillenartige Vertiefungen umfassen. Bevorzugt ist zusätzlich oder alternativ ein erfindungsgemäßer Fahrzeugreifen, wobei die Innenprofilblöcke, zumindest teilweise, bevorzugt überwiegend, besonders bevorzugt sämtlich, erste rillenartige Vertiefungen umfassen, welche bezogen auf den jeweiligen Profilblock, bevorzugt bezogen auf sämtliche der entsprechenden Profilblöcke, die gleiche Rillenform aufweisen. Bevorzugt ist zusätzlich oder alternativ auch ein erfindungsgemäßer Fahrzeugreifen, wobei die Innenprofilblöcke zumindest teilweise, bevorzugt überwiegend, besonders bevorzugt sämtlich, zwei oder mehr zueinander parallele erste rillenartige Vertiefungen umfassen, bevorzugt drei oder mehr äquidistant angeordnete zueinander parallele erste rillenartige Vertiefungen. Bevorzugt ist zusätzlich oder alternativ zudem ein erfindungsgemäßer Fahrzeugreifen, wobei die Innenprofilblöcke zumindest teilweise, bevorzugt überwiegend, besonders bevorzugt sämtlich, eine oder mehrere, bevorzugt eine oder zwei, zweite rillenartige Vertiefungen umfassen.

Denkbar ist analog zu den vorstehenden Ausführungen ein erfindungsgemäßer Fahrzeugreifen, wobei die Innenprofilblöcke zumindest teilweise, bevorzugt überwiegend, besonders bevorzugt sämtlich, eine oder mehrere erste rillenartige Vertiefungen umfassen, die mit einer oder mehreren der zweiten rillenartigen Vertiefungen verbunden sind. Bevorzugt ist jedoch alternativ wiederum ein erfindungsgemäßer Fahrzeugreifen, wobei die Innenprofilblöcke zumindest teilweise, bevorzugt überwiegend, besonders bevorzugt sämtlich, eine oder mehrere zweite rillenartige Vertiefungen umfassen, die nicht mit einer oder mehreren der ersten rillenartigen Vertiefungen verbunden sind.

Nachfolgend werden die Erfindung und bevorzugte Ausführungsformen der Erfindung unter Bezugnahme auf die beiliegenden Figuren näher erläutert und beschrieben. Dabei zeigen:
- Fig. 1: eine schematische Darstellung des Profils eines erfindungsgemäßen Fahrzeugreifens in einer besonders bevorzugten Ausführungsform;
- Fig. 2: eine Vergrößerung eines ersten Profilblocks des Profils der Fig. 1; und
- Fig. 3: eine Vergrößerung eines zweiten Profilblocks des Profils der Fig. 1.

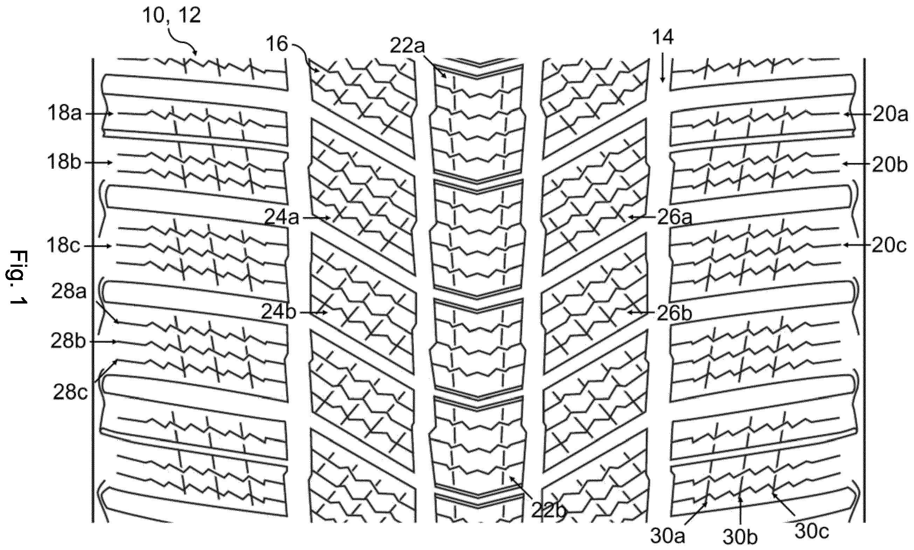

Fig. 1 visualisiert schematisch einen profilierten Laufstreifen 12 eines erfindungsgemäßen Fahrzeugreifens 10 für den Einsatz auf Schnee in einer besonders bevorzugten Ausführungsform. Der Fahrzeugreifen 10 ist dabei ein laufrichtungsgebundener Fahrzeugluftreifen, wobei die mittigen Spitzen der Innenprofilblöcke 22a, 22b in Laufrichtung weisen.

Der bezüglich der Rotationsachse rotationssymmetrische Laufstreifen 12 des gezeigten Fahrzeugreifens 10 weist mehrere Profilrillen 14 auf, die als Querrillen, Umfangsrillen und Schrägrillen ausgeführt sind und relativ zur der für den Fahrbahnkontakt vorgesehene Kontaktoberfläche 16 eine maximale Tiefe von etwa 8 mm aufweisen.

Im gezeigten Beispiel der Fig. 1 sind die verschiedenen Typen von Profilblöcken sowie die umfassten rillenartigen Vertiefungen visualisiert, wobei der gezeigte Laufstreifen 12 in axialer Richtung, der Reihe nach erste Außenprofilblöcke 18a, 18b, 18c, erste Zwischenprofilblöcke 24a, 24b, Innenprofilblöcke 22a, 22b, zweite Zwischenprofilblöcke 26a, 26b und zweite Außenprofilblöcke 20a, 20b, 20c umfasst.

Der Laufstreifen 12 weist orthogonal zu der Rotationsachse des Fahrzeugreifens 10 eine Spiegelebene auf, sodass gegenüberliegende erste Außenprofilblöcke 18a-c und zweite Außenprofilblöcke 20a-c sowie gegenüberliegende erste Zwischenprofilblöcke 24a-b und zweite Zwischenprofilblöcke 26a-b zueinander spiegelsymmetrisch ausgeführt sind.

Die ersten Außenprofilblöcke 18a-c und die zweiten Außenprofilblöcke 20a-c umfassen im gezeigten Beispiel der Fig. 1 jeweils drei verschiedene Außenprofilblöcke, welche sich hinsichtlich der maximalen Breite B_{B} in Umfangsrichtung und hinsichtlich der Zahl der ersten rillenartigen Vertiefungen 28a, 28b, 28c unterscheiden. Der erste Typus Außenprofilblöcke weist eine durchgehende erste rillenartige Vertiefung 28a-c, der zweite Typus Außenprofilblöcke weist zwei durchgehende erste rillenartige Vertiefungen 28a-c und der dritte Typus Außenprofilblöcke weist drei durchgehende erste rillenartige Vertiefungen 28a-c auf. Die ersten rillenartigen Vertiefungen 28a-c der Außenprofilblöcke sind dabei jeweils als Zickzacklinie ausgeführt und verlaufen in den Fällen der Außenprofilblöcke des zweiten und dritten Typus parallel zueinander.

Die Zwischenprofilblöcke können im gezeigten Beispiel ebenfalls in verschiedene Typen unterteilt werden. Die Zwischenprofilblöcke unterscheiden sich durch ihre maximale Breite B_{B} in Umfangsrichtung sowie durch die Anzahl erster rillenartiger Vertiefungen 28a-c. Der erste Typus Zwischenprofilblöcke weist drei durchgehende erste rillenartige Vertiefungen 28a-c und der zweite Typus Zwischenprofilblöcke vier durchgehende erste rillenartige Vertiefungen 28a-c auf. Die ersten rillenartigen Vertiefungen 28a-c der Zwischenprofilblöcke sind dabei ebenfalls als Zickzacklinie ausgeführt und verlaufen in nahezu äquidistanten Abständen parallel zueinander.

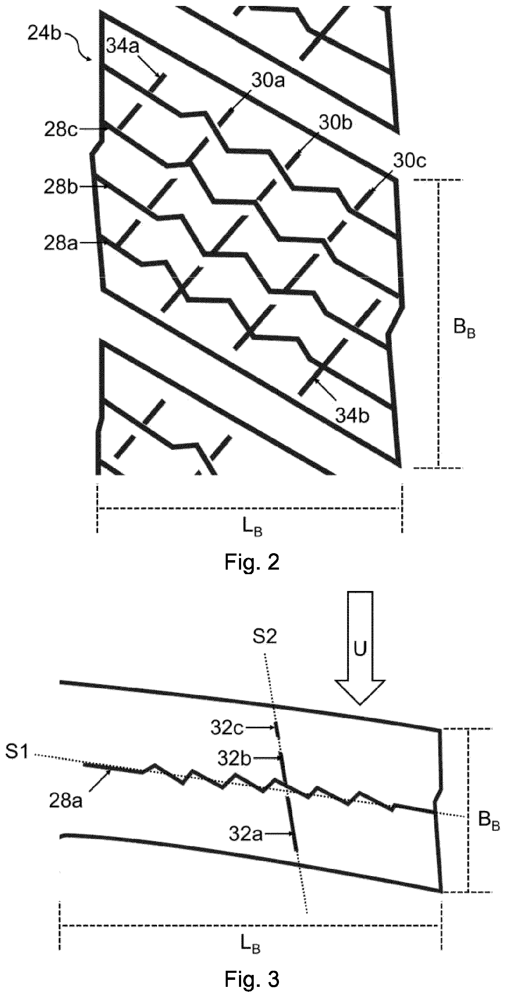

Sämtliche Zwischenprofilblöcke und Außenprofilblöcke weisen jeweils drei im Wesentlichen äquidistant zueinander angeordnete, gerade zweite rillenartige Vertiefungen 30a, 30b, 30c auf, welche als unterbrochene rillenartige Vertiefungen ausgeführt sind, wobei darüber hinaus auch weitere, kürzere rillenartige Vertiefungen 34a, 34b vorliegen. Die Verteilung der ersten rillenartigen Vertiefungen 28a-c und der zweiten rillenartigen Vertiefungen 30a-c sowie die weiteren rillenartigen Vertiefungen 34a-b sind in Fig. 2 am Beispiel eines Zwischenprofilblocks gezeigt, wobei in dieser Darstellung auch die Länge L_{B} und die Breite B_{B} eingezeichnet sind.

Die zweiten rillenartigen Vertiefungen 30a-c der Zwischenprofilblöcke und Außenprofilblöcke schließen bezogen auf die jeweilige Schwerpunktlinie mit sämtlichen ersten rillenartigen Vertiefung 28a-c des Profilblocks einen Schnittwinkel ein, welcher für die Zwischenprofilblöcke bei etwa 80° und für die Außenprofilblöcke bei etwa 72° liegt. Die Bestimmung des Schnittwinkels aus den jeweiligen Schwerpunktlinien der ersten rillenartigen Vertiefung 28a-c S1 und der zweiten rillenartigen Vertiefungen 30a-c S2 ist in Fig. 3 am Beispiel eines Außenprofilblocks veranschaulicht, wobei die Fig. 3 auch verdeutlicht, wie die Schwerpunktlinie S2 für eine zweite rillenartige Vertiefung 30a-c konstruiert wird, welche sich als unterbrochene Vertiefung aus drei rillenartigen Teilvertiefungen 32a, 32b, 32c zusammensetzt, wobei aus Gründen der Übersichtlichkeit jeweils nur eine der rillenartigen Vertiefungen gezeigt ist.

Ebenfalls gut in Fig. 3 zu erkennen ist, dass die Außenprofilblöcke zweite rillenartige Vertiefungen 30a-c umfassen, welche in Laufrichtung, die durch den mit U gekennzeichneten Pfeil angedeutet wird, in Richtung der Innenprofilblöcke 22a-b weisen. In Fig. 1 ist zu erkennen, dass die zweiten rillenartige Vertiefungen 30a-c der Innenprofilblöcke im Gegensatz hierzu einer invertierte Steigung aufweisen und in Laufrichtung von den Innenprofilblöcken 22a-b wegweisen, so dass sich bei der gemeinsamen Betrachtung der jeweiligen Zwischen- und Außenblöcke beiderseits der Innenprofilblöcke 22a-b ein V-förmiger Verlauf der zweiten rillenartige Vertiefungen 30a-c ergibt.

In Fig. 1 ist deutlich zu erkennen, dass die zweiten rillenartigen Vertiefungen 30a-c in den überwiegenden Fällen mit jeder rillenartigen Teilvertiefung 32a-c mit genau einer ersten rillenartigen Vertiefungen 28a-c verbunden sind. In Fig. 1 nicht dargestellt ist, dass die Querrillen zwischen den ersten Außenblöcken 18a und 18b sowie den zweiten Außenblöcken 20a und 20b, ebenso wie die Querrillen zwischen den Innenprofilblöcken 22a-b mit einer gegenüber den umlaufenden Profilrillen 14 geringfügig verringerten Rillentiefe ausgeführt sind.

Die ersten rillenartigen Vertiefungen 28a-c weisen im gezeigten Beispiel der Fig. 1 jeweils eine mittlere Rillentiefe von etwa 5 mm und eine mittlere Rillenbreite von etwa 0,5 mm auf. Die zweiten rillenartigen Vertiefungen 30a-c weisen im gezeigten Beispiel der Fig. 1 eine mittlere Rillenbreite von etwa 0,4 mm in den Außenblöcken und etwa 0,6 mm in den Zwischenblöcken auf. Die mittlere Rillentiefe der zweiten rillenartigen Vertiefungen 30a-c beträgt dabei in den Zwischenblöcken etwa 0,9 mm und in den Außenblöcken etwa 0,5 mm.

Die zwei Typen von Innenprofilblöcken 22a-b der Fig. 1 umfassen drei bzw. vier erste rillenartige Vertiefungen 28a-c und jeweils zwei zweite rillenartige Vertiefungen 30a-c auf, wobei die rillenartige Vertiefungen hinsichtlich der Tiefe und Breite ähnlich wie die entsprechenden rillenartigen Vertiefungen der Zwischenblöcke ausgelegt sind.

### Bezugszeichenliste

- 10: Fahrzeugreifen
- 12: profilierter Laufstreifen
- 14: Profilrillen
- 16: Kontaktoberfläche
- 18a-c: erste Außenprofilblöcke
- 20a-c: zweite Außenprofilblöcke
- 22a-b: Innenprofilblöcke
- 24a-b: erste Zwischenprofilblöcke
- 26a-b: zweite Zwischenprofilblöcke
- 28a-c: erste rillenartige Vertiefungen
- 30a-c: zweite rillenartige Vertiefungen
- 32a-c: rillenartige Teilvertiefungen
- 34a-b: weitere rillenartige Vertiefungen

## Patentansprüche

1. Fahrzeugreifen (10) mit einem in Umfangsrichtung verlaufenden profilierten Laufstreifen (12),
wobei der profilierte Laufstreifen (12) eine Vielzahl von durch Profilrillen (14) voneinander getrennten Profilblöcken umfasst, die jeweils eine für den Fahrbahnkontakt vorgesehene Kontaktoberfläche (16) aufweisen, wobei der profilierte Laufstreifen (12) als Profilblöcke umfasst:
i) eine Vielzahl von ersten Außenprofilblöcken (18a, 18b, 18c) und eine Vielzahl von zweiten Außenprofilblöcken (20a, 20b, 20c),
ii) eine Vielzahl von Innenprofilblöcken (22a, 22b), und
iii) eine Vielzahl von jeweils zwischen einem Innenprofilblock (22a, 22b) und einem ersten Außenprofilblock (18a, 18b, 18c) angeordneten ersten Zwischenprofilblöcken (24a, 24b) und eine Vielzahl von jeweils zwischen einem Innenprofilblock (22a, 22b) und einem zweiten Außenprofilblock (20a, 20b, 20c) angeordneten zweiten Zwischenprofilblöcken (26a, 26b),
wobei die ersten Außenprofilblöcke (18a, 18b, 18c), die zweiten Außenprofilblöcke (20a, 20b, 20c), die ersten Zwischenprofilblöcke (24a, 24b) und die zweiten Zwischenprofilblöcke (26a, 26b) in der Kontaktoberfläche (16) jeweils durchgehende oder unterbrochene erste rillenartige Vertiefungen (28a, 28b, 28c) und durchgehende oder unterbrochene zweite rillenartige Vertiefungen (30a, 30b, 30c) umfassen,
wobei zwei oder mehr rillenartige Teilvertiefungen (32a, 32b, 32c) dann eine unterbrochene rillenartige Vertiefung (28a, 28b, 28c, 30a, 30b, 30c) bilden, wenn von der den Verlauf nachbildenden Verlängerung der Schwerpunktlinie einer rillenartigen Teilvertiefung (32a, 32b, 32c) kein Abschnitt der weiteren rillenartigen Teilvertiefungen (32a, 32b, 32c) einen größeren Abstand als 1,2*R aufweist, wobei R der maximale Abstand eines Teils der ersten Teilvertiefung (32a, 32b, 32c) von der Schwerpunktlinie ist,
wobei die ersten rillenartigen Vertiefungen (28a, 28b, 28c) jeweils eine Gesamtrillenlänge von 0,7*L_{B} oder mehr aufweisen, wobei L_{B} die maximale Länge des Profilblocks in axialer Richtung ist, wobei die zweiten rillenartigen Vertiefungen (30a, 30b, 30c) jeweils eine Gesamtrillenlänge von 0,5*B_{B} oder mehr aufweisen, wobei B_{B} die maximale Breite des Profilblocks in Umfangsrichtung ist, wobei es sich im Fall von unterbrochenen rillenartigen Vertiefungen (28a, 28b, 28c, 30a, 30b, 30c) bei der Gesamtrillenlänge um die Summe der Rillenlängen der Teilvertiefungen (32a, 32b, 32c) handelt,
wobei die ersten Außenprofilblöcke (18a, 18b, 18c), die zweiten Außenprofilblöcke (20a, 20b, 20c), die ersten Zwischenprofilblöcke (24a, 24b) und die zweiten Zwischenprofilblöcke (26a, 26b) jeweils drei oder mehr zweite rillenartige Vertiefungen (30a, 30b, 30c) umfassen, deren Schwerpunktlinien mit der Schwerpunktlinie zumindest einer ersten rillenartigen Vertiefung (28a, 28b, 28c) des Profilblocks einen Schnittwinkel im Bereich von 30° bis 89° einschließen, wobei im Falle von unterbrochenen rillenartigen Vertiefungen (28a, 28b, 28c, 30a, 30b, 30c) die Gesamtschwerpunktlinie betrachtet wird,
**dadurch gekennzeichnet, dass**
die zweiten rillenartigen Vertiefungen (30a, 30b, 30c) zumindest teilweise unterbrochene rillenartige Vertiefungen sind, umfassend zwei oder mehr rillenartige Teilvertiefungen (32a, 32b, 32c).

2. Fahrzeugreifen nach Anspruch 1, wobei die ersten Zwischenprofilblöcke (24a, 24b) und/oder die zweiten Zwischenprofilblöcke (26a, 26b) zumindest teilweise drei oder mehr zweite rillenartige Vertiefungen (30a, 30b, 30c) umfassen, deren Schwerpunktlinien mit der Schwerpunktlinie zumindest einer ersten rillenartigen Vertiefung (28a, 28b, 28c) einen Schnittwinkel im Bereich von 35° bis 87° einschließen.

3. Fahrzeugreifen nach einem der Ansprüche 1 bis 2, wobei die ersten Zwischenprofilblöcke (24a, 24b) und/oder die zweiten Zwischenprofilblöcke (26a, 26b) zumindest teilweise zweite rillenartige Vertiefungen (30a, 30b, 30c) umfassen, deren kleinerer Schnittwinkel mit der Schwerpunktlinie zumindest einer ersten rillenartigen Vertiefung (28a, 28b, 28c), größer ist als der entsprechende Schnittwinkel der zweiten rillenartigen Vertiefungen (30a, 30b, 30c) mit der Schwerpunktlinie zumindest einer ersten rillenartigen Vertiefung (28a, 28b, 28c) der jeweils außenliegenden Außenprofilblöcke.

4. Fahrzeugreifen nach einem der Ansprüche 1 bis 3, wobei die ersten Zwischenprofilblöcke (24a, 24b) und/oder die zweiten Zwischenprofilblöcke (26a, 26b), zumindest teilweise zweite rillenartige Vertiefungen (30a, 30b, 30c) umfassen, deren Schnittwinkel mit der Schwerpunktlinie zumindest einer ersten rillenartigen Vertiefung (28a, 28b, 28c) sich um weniger als 30° von dem entsprechenden Schnittwinkel der zweiten rillenartigen Vertiefungen (30a, 30b, 30c) mit der Schwerpunktlinie zumindest einer ersten rillenartigen Vertiefung (28a, 28b, 28c) der jeweils außenliegenden Außenprofilblöcke unterscheidet.

5. Fahrzeugreifen nach einem der Ansprüche 1 bis 4, wobei der Fahrzeugreifen ein laufrichtungsgebundener Fahrzeugreifen ist, wobei die ersten Außenprofilblöcke (18a, 18b, 18c) und/oder die zweiten Außenprofilblöcke (20a, 20b, 20c) zumindest teilweise drei oder mehr zweite rillenartige Vertiefungen (30a, 30b, 30c) umfassen, welche in Laufrichtung in Richtung der Innenprofilblöcke (22a, 22b) weisen.

6. Fahrzeugreifen nach einem der Ansprüche 1 bis 5, wobei der Fahrzeugreifen ein laufrichtungsgebundener Fahrzeugreifen ist, wobei die ersten Zwischenprofilblöcke (24a, 24b) und/oder die zweiten Zwischenprofilblöcke (26a, 26b) zumindest teilweise drei oder mehr zweite rillenartige Vertiefungen (30a, 30b, 30c) umfassen, welche in Laufrichtung von den Innenprofilblöcken (22a, 22b) wegweisen.

7. Fahrzeugreifen nach einem der Ansprüche 1 bis 6, wobei die ersten Außenprofilblöcke (18a, 18b, 18c) und/oder die zweiten Außenprofilblöcke (20a, 20b, 20c) zumindest teilweise eine oder mehrere erste rillenartige Vertiefungen (28a, 28b, 28c) umfassen, die mit einer oder mehreren der zweiten rillenartigen Vertiefungen (30a, 30b, 30c) verbunden sind.

8. Fahrzeugreifen nach einem der Ansprüche 1 bis 7, wobei die ersten Zwischenprofilblöcke (24a, 24b) und/oder die zweiten Zwischenprofilblöcke (26a, 26b) zumindest teilweise eine oder mehrere erste rillenartige Vertiefungen (28a, 28b, 28c) umfassen, die mit einer oder mehreren der zweiten rillenartigen Vertiefungen (30a, 30b, 30c) verbunden sind.

## Claims

1. Vehicle tyre (10) having a profiled tread (12) which extends in a circumferential direction,
wherein the profiled tread (12) comprises a multiplicity of profile blocks which are separated from one another by profile grooves (14) and which each have a contact surface (16) intended for contact with the roadway, wherein, as profile blocks, the profiled tread (12) comprises:
i) a multiplicity of first outer profile blocks (18a, 18b, 18c) and a multiplicity of second outer profile blocks (20a, 20b, 20c),
ii) a multiplicity of inner profile blocks (22a, 22b), and
iii) a multiplicity of first intermediate profile blocks (24a, 24b), in each case arranged between an inner profile block (22a, 22b) and a first outer profile block (18a, 18b, 18c), and a multiplicity of second intermediate profile blocks (26a, 26b), in each case arranged between an inner profile block (22a, 22b) and a second outer profile block (20a, 20b, 20c),
wherein the first outer profile blocks (18a, 18b, 18c), the second outer profile blocks (20a, 20b, 20c), the first intermediate profile blocks (24a, 24b) and the second intermediate profile blocks (26a, 26b) comprise in the contact surface (16) in each case continuous or interrupted first groove-like depressions (28a, 28b, 28c) and continuous or interrupted second groove-like depressions (30a, 30b, 30c),
wherein two or more groove-like depression portions (32a, 32b, 32c) form an interrupted groove-like depression (28a, 28b, 28c, 30a, 30b, 30c) if the distance from the course-replicating extension of the centroid line of a groove-like depression portion (32a, 32b, 32c) is not greater than 1.2*R for any section of the further groove-like depression portions (32a, 32b, 32c), where R is the maximum distance of a part of the first depression portion (32a, 32b, 32c) from the centroid line,
wherein the first groove-like depressions (28a, 28b, 28c) each have a total groove length of 0.7*L_{B} or greater, where L_{B} is the maximum length of the profile block in an axial direction, wherein the second groove-like depressions (30a, 30b, 30c) each have a total groove length of 0.5*B_{B} or greater, where B_{B} is the maximum width of the profile block in the circumferential direction, wherein, in the case of interrupted groove-like depressions (28a, 28b, 28c, 30a, 30b, 30c), the total groove length is the sum of the groove lengths of the depression portions (32a, 32b, 32c),
wherein the first outer profile blocks (18a, 18b, 18c), the second outer profile blocks (20a, 20b, 20c), the first intermediate profile blocks (24a, 24b) and the second intermediate profile blocks (26a, 26b) in each case comprise three or more second groove-like depressions (30a, 30b, 30c) whose centroid lines include an angle of intersection in the range of 30° to 89° with the centroid line of at least one first groove-like depression (28a, 28b, 28c) of the profile block, wherein, in the case of interrupted groove-like depressions (28a, 28b, 28c, 30a, 30b, 30c), the overall centroid line is considered,
**characterized in that** at least some of the second groove-like depressions (30a, 30b, 30c) are interrupted groove-like depressions comprising two or more groove-like depression portions (32a, 32b, 32c).

2. Vehicle tyre according to Claim 1, wherein at least some of the first intermediate profile blocks (24a, 24b) and/or of the second intermediate profile blocks (26a, 26b) comprise three or more second groove-like depressions (30a, 30b, 30c) whose centroid lines include an angle of intersection in the range of 35° to 87° with the centroid line of at least one first groove-like depression (28a, 28b, 28c).

3. Vehicle tyre according to either of Claims 1 and 2, wherein at least some of the first intermediate profile blocks (24a, 24b) and/or of the second intermediate profile blocks (26a, 26b) comprise second groove-like depressions (30a, 30b, 30c) whose smaller angle of intersection with the centroid line of at least one first groove-like depression (28a, 28b, 28c) is greater than the corresponding angle of intersection of the second groove-like depressions (30a, 30b, 30c) with the centroid line of at least one first groove-like depression (28a, 28b, 28c) of the respectively external outer profile blocks.

4. Vehicle tyre according to one of Claims 1 to 3, wherein at least some of the first intermediate profile blocks (24a, 24b) and/or of the second intermediate profile blocks (26a, 26b) comprise second groove-like depressions (30a, 30b, 30c) whose angle of intersection with the centroid line of at least one first groove-like depression (28a, 28b, 28c) differs by less than 30° from the corresponding angle of intersection of the second groove-like depressions (30a, 30b, 30c) with the centroid line of at least one first groove-like depression (28a, 28b, 28c) of the respectively external outer profile blocks.

5. Vehicle tyre according to one of Claims 1 to 4, wherein the vehicle tyre is a vehicle tyre of directional design, wherein at least some of the first outer profile blocks (18a, 18b, 18c) and/or of the second outer profile blocks (20a, 20b, 20c) comprise three or more second groove-like depressions (30a, 30b, 30c) which, in the running direction, point towards the inner profile blocks (22a, 22b).

6. Vehicle tyre according to one of Claims 1 to 5, wherein the vehicle tyre is a vehicle tyre of directional design, wherein at least some of the first intermediate profile blocks (24a, 24b) and/or of the second intermediate profile blocks (26a, 26b) comprise three or more second groove-like depressions (30a, 30b, 30c) which, in the running direction, point away from the inner profile blocks (22a, 22b).

7. Vehicle tyre according to one of Claims 1 to 6, wherein at least some of the first outer profile blocks (18a, 18b, 18c) and/or of the second outer profile blocks (20a, 20b, 20c) comprise one or more first groove-like depressions (28a, 28b, 28c) which are connected to one or more of the second groove-like depressions (30a, 30b, 30c).

8. Vehicle tyre according to one of Claims 1 to 7, wherein at least some of the first intermediate profile blocks (24a, 24b) and/or of the second intermediate profile blocks (26a, 26b) comprise one or more first groove-like depressions (28a, 28b, 28c) which are connected to one or more of the second groove-like depressions (30a, 30b, 30c).

## Revendications

1. Pneumatique de véhicule (10) comprenant une bande de roulement profilée (12) s'étendant dans la direction circonférentielle,
dans lequel la bande de roulement profilée (12) comprend une pluralité de blocs de profil séparés les uns des autres par des rainures de profil (14), chacun présentant une surface de contact (16) destinée à entrer en contact avec la chaussée, la bande de roulement profilée (12) comprenant, en tant que blocs de profil :
i) une pluralité de premiers blocs de profil extérieurs (18a, 18b, 18c) et une pluralité de deuxièmes blocs de profil extérieurs (20a, 20b, 20c),
ii) une pluralité de blocs de profil intérieurs (22a, 22b), et
iii) une pluralité de premiers blocs de profil intermédiaires (24a, 24b), chacun disposé entre un bloc de profil intérieur (22a, 22b) et un premier bloc de profil extérieur (18a, 18b, 18c), et une pluralité de deuxièmes blocs de profil intermédiaires (26a, 26b), chacun disposé entre un bloc de profil intérieur (22a, 22b) et un deuxième bloc de profil extérieur (20a, 20b, 20c),
dans lequel les premiers blocs de profil extérieurs (18a, 18b, 18c), les deuxièmes blocs de profil extérieurs (20a, 20b, 20c), les premiers blocs de profil intermédiaires (24a, 24b) et les deuxièmes blocs de profil intermédiaires (26a, 26b) comprennent chacun, dans leur surface de contact (16), des premières dépressions en forme de rainure (28a, 28b, 28c) continues ou discontinues et des deuxièmes dépressions en forme de rainure (30a, 30b, 30c) continues ou discontinues,
dans lequel deux dépressions partielles en forme de rainure (32a, 32b, 32c) ou plus forment une dépression en forme de rainure discontinue (28a, 28b, 28c, 30a, 30b, 30c) lorsqu'aucune partie des autres dépressions partielles en forme de rainure (32a, 32b, 32c) ne se trouve à une distance supérieure à 1,2*R du prolongement, suivant le tracé, de la ligne médiane d'une dépression partielle en forme de rainure (32a, 32b, 32c), R étant la distance maximale entre une partie de la première dépression partielle (32a, 32b, 32c) et la ligne médiane,
dans lequel les premières dépressions en forme de rainure (28a, 28b, 28c) présentent chacune une longueur totale de rainure supérieure ou égale à 0,7*LB, LB étant la longueur maximale du bloc de profil dans la direction axiale, dans lequel les deuxièmes dépressions en forme de rainure (30a, 30b, 30c) présentent chacune une longueur totale de rainure supérieure ou égale à 0,5*BB, BB étant la largeur maximale du bloc de profil dans la direction circonférentielle, et dans lequel, dans le cas de dépressions en forme de rainure discontinues (28a, 28b, 28c, 30a, 30b, 30c), la longueur totale de rainure correspond à la somme des longueurs de rainure des dépressions partielles (32a, 32b, 32c),
dans lequel les premiers blocs de profil extérieurs (18a, 18b, 18c), les deuxièmes blocs de profil extérieurs (20a, 20b, 20c), les premiers blocs de profil intermédiaires (24a, 24b) et les deuxièmes blocs de profil intermédiaires (26a, 26b) comprennent chacun trois deuxièmes dépressions en forme de rainure (30a, 30b, 30c) ou plus, dont les lignes médianes forment, avec la ligne médiane d'au moins une première dépression en forme de rainure (28a, 28b, 28c) du bloc de profil, un angle d'intersection compris entre 30° et 89°, la ligne médiane totale étant prise en considération dans le cas de dépressions en forme de rainure discontinues (28a, 28b, 28c, 30a, 30b, 30c),
**caractérisé en ce que** les deuxièmes dépressions en forme de rainure (30a, 30b, 30c) sont, au moins en partie, des dépressions en forme de rainure discontinues comprenant deux dépressions partielles en forme de rainure (32a, 32b, 32c) ou plus.

2. Pneumatique de véhicule selon la revendication 1, dans lequel les premiers blocs de profil intermédiaires (24a, 24b) et/ou les deuxièmes blocs de profil intermédiaires (26a, 26b) comprennent, au moins en partie, trois deuxièmes dépressions en forme de rainure (30a, 30b, 30c) ou plus, dont les lignes médianes forment, avec la ligne médiane d'au moins une première dépression en forme de rainure (28a, 28b, 28c), un angle d'intersection compris entre 35° et 87°.

3. Pneumatique de véhicule selon l'une des revendications 1 ou 2, dans lequel les premiers blocs de profil intermédiaires (24a, 24b) et/ou les deuxièmes blocs de profil intermédiaires (26a, 26b) comprennent, au moins en partie, des deuxièmes dépressions en forme de rainure (30a, 30b, 30c) dont le plus petit angle d'intersection avec la ligne médiane d'au moins une première dépression en forme de rainure (28a, 28b, 28c) est supérieur à l'angle d'intersection correspondant que forment les deuxièmes dépressions en forme de rainure (30a, 30b, 30c) avec la ligne médiane d'au moins une première dépression en forme de rainure (28a, 28b, 28c) des blocs de profil extérieurs situés respectivement du côté extérieur.

4. Pneumatique de véhicule selon l'une des revendications 1 à 3, dans lequel les premiers blocs de profil intermédiaires (24a, 24b) et/ou les deuxièmes blocs de profil intermédiaires (26a, 26b) comprennent, au moins en partie, des deuxièmes dépressions en forme de rainure (30a, 30b, 30c) dont l'angle d'intersection avec la ligne médiane d'au moins une première dépression en forme de rainure (28a, 28b, 28c) diffère de moins de 30° de l'angle d'intersection correspondant que forment les deuxièmes dépressions en forme de rainure (30a, 30b, 30c) avec la ligne médiane d'au moins une première dépression en forme de rainure (28a, 28b, 28c) des blocs de profil extérieurs situés respectivement du côté extérieur.

5. Pneumatique de véhicule selon l'une des revendications 1 à 4, dans lequel le pneumatique de véhicule présente un sens de roulement imposé, les premiers blocs de profil extérieurs (18a, 18b, 18c) et/ou les deuxièmes blocs de profil extérieurs (20a, 20b, 20c) comprenant, au moins en partie, trois deuxièmes dépressions en forme de rainure (30a, 30b, 30c) ou plus qui, dans le sens de roulement, sont orientées vers les blocs de profil intérieurs (22a, 22b).

6. Pneumatique de véhicule selon l'une des revendications 1 à 5, dans lequel le pneumatique de véhicule présente un sens de roulement imposé, les premiers blocs de profil intermédiaires (24a, 24b) et/ou les deuxièmes blocs de profil intermédiaires (26a, 26b) comprenant, au moins en partie, trois deuxièmes dépressions en forme de rainure (30a, 30b, 30c) ou plus qui, dans le sens de roulement, sont orientées à l'opposé des blocs de profil intérieurs (22a, 22b).

7. Pneumatique de véhicule selon l'une des revendications 1 à 6, dans lequel les premiers blocs de profil extérieurs (18a, 18b, 18c) et/ou les deuxièmes blocs de profil extérieurs (20a, 20b, 20c) comprennent, au moins en partie, une ou plusieurs premières dépressions en forme de rainure (28a, 28b, 28c) reliées à une ou plusieurs des deuxièmes dépressions en forme de rainure (30a, 30b, 30c).

8. Pneumatique de véhicule selon l'une des revendications 1 à 7, dans lequel les premiers blocs de profil intermédiaires (24a, 24b) et/ou les deuxièmes blocs de profil intermédiaires (26a, 26b) comprennent, au moins en partie, une ou plusieurs premières dépressions en forme de rainure (28a, 28b, 28c) reliées à une ou plusieurs des deuxièmes dépressions en forme de rainure (30a, 30b, 30c).
